# EUROPEAN PATENT APPLICATION

(11) **EP 1 693 766 A2**
(43) Date of publication of application: **23.08.2006**
(21) Application number: 05257201.3
(22) Date of filing: 23.11.2005
(51) Int. Cl.: G06F 17/30

(54) **File system access control apparatus, file system access control method and recording medium including file system access control program**

(30) Priority: 18.02.2005 JP 2005042980
(71) Applicant: Hitachi, Ltd., Tokyo (JP)
(72) Inventor: Ishii, Yohsuke, Hitachi Ltd., IP Group, Chiyoda-ku, Tokyo 100-8220 (JP); Nakatani, Yoji, Hitachi Ltd., IP Group, Chiyoda-ku, Tokyo 100-8220 (JP); Nakano, Takahiro, Hitachi Ltd., IP Group, Chiyoda-ku, Tokyo 100-8220 (JP)
(74) Representative: Hodsdon, Stephen James

(57) **Abstract**

A file system access control which carries WORM commitment for files in a single transaction is provided. The file system access control apparatus (1) includes command files (31) that support WORM commitment, interprets WORM commitment command which is registered in command files by means of a daemon process module (18) and executes WORM commitment in a file. A plurality of files and those under management of directories (30) are changed of the file access modes to meet WORM. In addition, a system that allows WRITE command for the command files by means of a standard interface of the file system. The results of WORM commitment is registered in the repository files under the system regarding the present invention.

## Description

The present invention relates to a file system access controller (e.g. a file server), a file system access control method and a recording medium including a file system access control program.

A protective function such as WORM (Write Once Read Many) to keep the recorded files un-writable but even readable has been provided for a hard disk device and RAID (Redundant Arrays of Independent Disks). For example, the reference below shows that WORM file mode change is executed for the file by changing the attribute of the file so that the file is accessed as a Read Only file. More specifically, the modification is possible by changing access type (for instance, CHMOD command for UNIX (a registered trade mark)).

### Reference 1:

US Patent Application 2004-0186858 (A1), "Write-Once-Read=many Storage System and Method for Implementing the same", William P. McGovern et al.

However the conventional mode change for WORM has not been performed over all the files in a storage system in a batch process. In other words, the conventional mode change does not support a single transaction for the WORM file mode changing of a group of directory files or another group of other files managed by a different file system. The present invention provides a single transaction capability that supports a batch process of the plural files or those managed under a directory for which a file system access control apparatus, file system access control method and recording medium including the file system access control program that generates a command procedure to realize a single transaction capability for various file access types.

In order to preferably realize such capability, the present invention implements a command file that supports the various access modes implemented in the standard protocols as an accessing tool to various files. The file system access control means is handling the process of the access commands to the files under various file systems in a fashion of a trigger by means of the WRITE command after receiving the WRITE command to the command file which the standard protocols support under cooperation with a processing means, a memory means and a communication means which is, for example, to link to an internet thereof.

According to the system construction of the file system access control system in an aspect of the present invention, it is possible to change access modes of plural files and directories into WORM file modes in a single transaction by interpreting commands which are available and are included in the standard protocols widely used for the regular file system.

By using aspects of the present invention, the user can execute WORM file mode change for the plural files and the directory in a single transaction under a file system access management by using a command file including the procedures necessary for accessing and changing the mode of the files to WORM file mode under the existing file access system. The file system access control apparatus supports the standard protocols which clients use in a way such that the command files have a capability to be written and interpreted to execute the commands therein and therefore it is possible to utilize the WORM file mode change capability by using the standard protocols.

Further aspects of the invention are set out in the claims.

In the Figures:
FIG. 1 is a schematic that shows a structure of a file system access control apparatus.
FIG. 2 is a schematic that conceptually shows a fundamental implementation of the functional structure that carries out the WORM file mode change.
FIG. 3 is a schematic that shows accesses of control modules and other modules in use of the command file.
FIG. 4 is a schematic that shows a state transition of files in WORM commitment process.
FIG. 5 is a schematic that shows a configuration of a directory structure and file attributes.
FIG. 6 is a schematic that shows an example of command files.
FIG. 7 is a schematic that shows a command file written in an XML format.
FIG. 8 is a schematic that shows an example of confirmation (receipt) and a result of execution regarding a command to be registered in a repository file.
FIG. 9 is a schematic that explains an attribute of objective files under a file system.
FIG. 10 is a schematic that explains a flow of process execution in WORM commitment in an asynchronous scheme.
FIG. 11 is a schematic that explains a flow of a command registration.
FIG. 12 is a schematic that explains command processes by command daemon process.
FIG. 13 is a schematic that explains a process of command recursive receipt scheme.
FIG. 14 is a schematic that explains a process of command receipt scheme by unit of command file.
FIG. 15 is a schematic that explains a process of command batch receipt scheme.
FIG. 16 is a schematic that explains a process that is to obtain repository information from a repository file.
FIG. 17 is a schematic that explains a command execution process for an objective file.
FIG. 18 is a schematic that explains a command execution process for a objective directory.
FIG. 19 is a schematic that explains a process of setting and extending retention terms regarding WORM files.
FIG. 20 is a schematic that explains processes for WORM commitment.
FIG. 21 is a schematic that explains a process to be Re-Writable of file.
FIG. 22 is a schematic that explains a DELETE process of a file which has been committed to the WORM status.
FIG. 23 is a schematic that explains a process to prevent alternation of files which have been committed to the WORM status.
FIG. 24 is a schematic that explains a process to monitor a daemon process which is triggered in predetermined time interval.
FIG. 25 is a schematic that explains shows an intra-system function flow in a synchronous operation with a command daemon process.
FIG. 26 is a schematic that explains an intra-system function flow to be committed to the WORM status without a command daemon process.
FIG. 27 is a schematic that explains a process of a registration command which is executed to a command file in a synchronous operation (the second embodiment).
FIG. 28 is a schematic that explains execution of a command for objective files in a synchronous operation (the second embodiment).
FIG. 29 is a schematic that explains a command execution process for objective directories in a synchronous operation (the second embodiment).
FIG. 30 is a schematic that shows a variation regarding WORM states.
FIG. 31 is a schematic that shows another variation regarding WORM state.
FIG. 32 is a schematic that shows another variation regarding WORM state.
FIG. 33 is a schematic that explains a variation regarding a command input and a resultant output of operations.
FIG. 34 is a schematic that explains another variation regarding a command input and a resultant output of operations.
FIG. 35 is a schematic that explains another variation regarding a command input and a resultant output of operations.
FIG. 36 is a schematic that explains another variation regarding a command input and a resultant output of operations.

The best mode of the embodiment regarding the present invention will be discussed. The first and second embodiments are given for asynchronous and synchronous commitment to the WORM status, respectively. The differences of the first and second embodiments are discussed in detail and the other embodiments are provided for the supplemental discussion of the present invention.

The first embodiment employs a daemon process in the execution of the commitment to the WORM status for the files recorded in the command file, by which an asynchronous operation can be carried out in the fundamental procedures.

### (Hardware Construction)

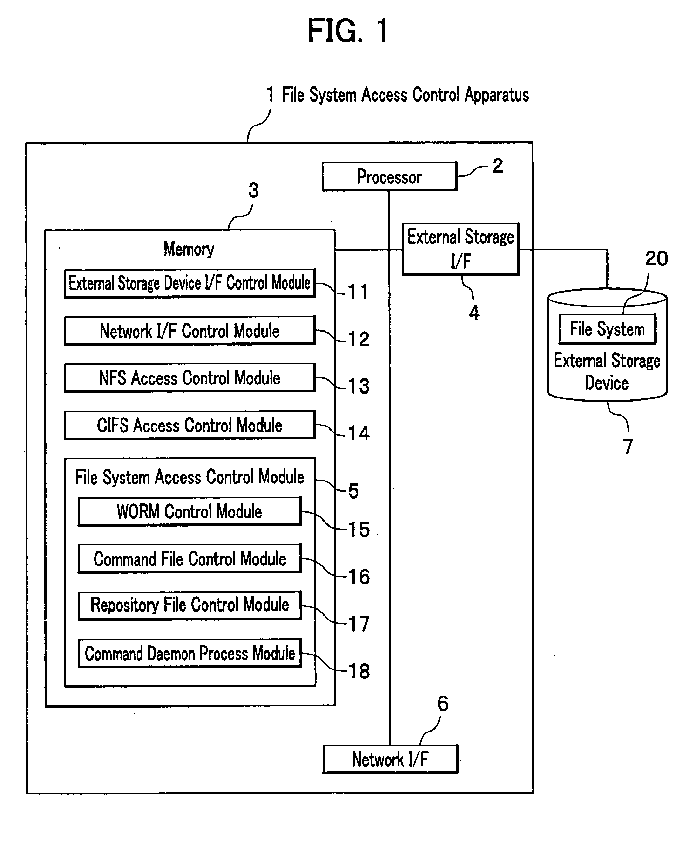

FIG. 1 shows the fundamental construction of a file system access control apparatus of an embodiment of the present invention. The file system access control apparatus 1 comprises a processor 2, a memory 3, a device interface 4 for an external storage device 7 and a network interface 6. Further preferred embodiment can include the external storage device 7 which is included in the file system access control apparatus 1.

In the memory 3, an external storage device I/F (an abbreviation of "interface") control module, a network I/F control module 12, an NFS (Network File System) access control module 13, CIFS (Common Internet File System) access control module 14 and a file system access control module 5. The file system access control module 5 further comprises a WORM control module 15, a command file control module 16, a repository file control module 17 and command daemon process module 18. The external storage device 7 includes a file system 20.

The processor 2 can be a central processor unit which has a conventional processing operations and functions. The memory 3 is connected to the bus line and controlled by the processor 2. The external storage I/F 4 can be an I/F such as a standard interface as ultra2-SCSI (untra2-Small Computer System Interface), ATA-4 (AT Attachment-4) or Fiber Channel. There is no specific restriction in selecting the device interface.

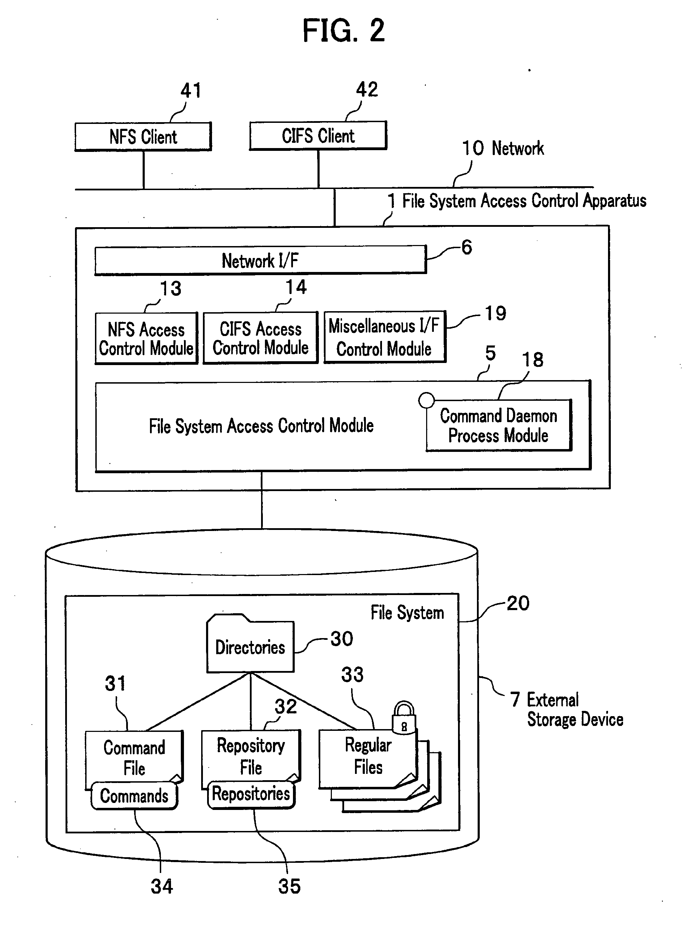

The file system access control module 5 has a function to control the access and access mode to the files which are generated and compiled under a certain file system. For this purpose, the file system access control module 5 is implemented by the WORM control module 15, repository file control module 17 which manages repository file 32 (shown in FIG. 2) that archives the result of the execution of commitment to the WORM status and the command daemon process module 18 which is a daemon that executes the process for commitment to the WORM status. The command daemon process module 18 carries out the procedure necessary the commitment to the WORM status by means of the WORM control module 15.

The external storage device I/F control module 11 is a control program that controls the operation of the external storage device I/F 4 and the network I/F control module 12 is a program that drives and controls the network I/F 6, which will be discussed in details later. The NFS access control module 13 and CIFS access control module 14 are the programs that support and control the access to the files under the file system 20. The NFS access control module 13 supports the NFS protocol accesses to the files under the UNIX (a trade mark) operation system and the CIFS access control module 14 supports the SMB (Server Message Block) protocol accesses to the files under WINDOWS (a registered trade mark) or UNIX (another registered trade mark).

The network I/F 6 is a hardware interface to connect the internal bus to the communication line for the network such as NIC (Network Interface Card) that is available for constructing a conventional Ethernet (a trade mark). The network communication protocol should cover various communication protocols and should not be restricted to a specific one.

The external storage device 7 can be a conventional hard disk device or disk array devices such as RAID (Redundant Arrays of Independent Disks) devices for safer integrity of the typical data archiving. The external storage device 7 can be separated from the file system access control apparatus 1 or can be included in the file system access control apparatus device 1. The interface device such as the external storage I/F 4 to the external storage device is not restricted to a specific device but can be other ones as far as the similar functions with other types of storage devices as well.

The file system access control apparatus 1 can construct a file server in association with the external storage device 7.

### (Process Implementation for WORM File Mode Change)

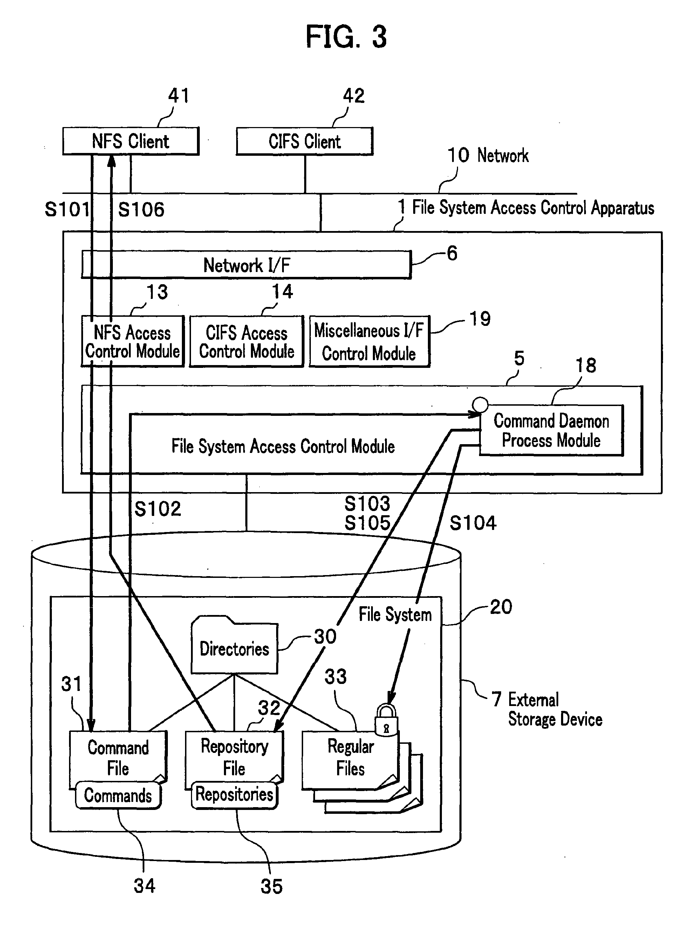

FIG. 2 and FIG. 3 show the fundamental implementation of the functional structure that carries out the commitment to the WORM status. We use "WORM commitment" as a terminology for meaning the implementation of the functional structure to carry out the commitment to the WORM status, hereinafter. FIG. 2 shows the structural elements such as modules, files and clients etc. that support the WORM commitment for which the file system access control apparatus 1 offers the necessary command file.

The command file according to embodiments of the present invention is different from the conventional command execution files but is an interface that provides the procedure for accessing the file system by means of the capability that is supported by the file system access control module 5. The actual substance of the command file is a file that manages and has accessibility to the file system. The command file can be written by the conventional WRITE procedure. The content written in the command file is not only archived in the file system but also interpreted as an actual access command to the file system by means of the file system access control module 5 and finally the access command is executed. The file that describes the conventional command such as shell script of UNIX (a registered trade mark) is once written and then it is necessary that the user directs the execution as a regular file after writing as a regular file. The command file proceeds to the direct execution as is after the command file executes WRITE execution. The description in the command file implies the command directing to the file system and the discretion in the file system leads to the expansion in the kinds and formats of the files and therefore the future interface specifications and expansion therefore.

As shown in FIG. 2, the file system access control apparatus 1 is accessed by clients that keep communication with standard protocols such as NFS or CIFS protocol through the network 10. Specifically, an NFS client 41 and CIFS client 42 are connected to the file system access control apparatus 1 through the net work 10 and the network I/F 6 and these clients control the access by means of the NFS access control module 13 and the CIFS access control module 14, which obtains the functions regarding WORM commitment by the function provided in the WORM control module 15 through the command daemon process module 18.

The file system access control module 5 accesses the file system 20 installed in the external storage device 7 and writes and updates the command file 31, repository file 32 and the regular file 33 on necessity. In FIG. 2, the command file 31 and the repository file 32 are not subject to WORM commitment however the regular files marked with a key are subject to such WORM commitment.

FIG. 2 shows a miscellaneous I/F control module 19 that supports accesses from the network 10 change other than the NFS access control module 13 and the CIFS access control module 14. The purpose of the miscellaneous I/F control module 19 is to support various standard protocol other than NFS and CIFS. More concretely, it is possible to access the file system 20 if the FTP (File Transfer Protocol) and HTTP (Hyper Text Transfer Protocol) and SMTP (Simple Mail Transfer Protocol) are installed in the miscellaneous I/F control module 19.

For example, it is possible to add a new file and retrieve a stored file through a FTP daemon process by using "PUT" command and "GET" command for which the file is handled under the file system 20 and the FTP protocol resultantly access to the file system 20.

When HTTP protocol is used, an expanded WebDAV (Distributed Authoring and Versioning protocol for the World Wide Web) protocol that is preferred to use the similar PUT command as in the FTP is alternatively used. For this case, it is possible to use the HTTP (WebDAV) protocol similar to the case when FTP is used.

It is possible to access the file system 20 by using a protocol implemented in a mail protocol for the case when SMTP accesses to the file system 20 by means of the transmitting and receiving protocol if a daemon process (which is different from the conventional transmitting and receiving daemon) is installed in the miscellaneous I/F control module 19. The standard protocols are not confined in NFS, CIFS, FTP and HTTP (WebDAV) as we have been already discussed and the daemon process that supports the handling the command file 31 and the regular file 33 by accessing the file system 20 can have the same capability.

The daemons that correspond to the protocols as NFS and CIFS can have two different approaches as explained as follows. The first approach is that, as shown in FIG. 2, a new type of daemon (as denoted with "18" in FIG. 2) other than a daemon which does not support the conventional WORM commitment. The first and the second embodiments take this first approach. The second approach is to modify or expand the daemon process used in NFS and CIFS to the daemon process that support WORM commitment. The same file access control is obtained whichever approach is chosen.

FIG. 3 shows accesses of the control modules etc. in use of the command file for the case when the NFS client accesses to file system access control apparatus 1.

The NFS client 41 executes WRITE access (S101) for which the NFS access control module 13 and the file system access control module 5 installed cooperate in the file system access control apparatus 1 after the access is made through the network I/F 10.

In reply to this WRITE, the WORM control module 15 (see FIG. 1) in the file system access control module 5 is called through the command daemon process module 18 after which the command file 31 already written by the NFS client is checked for the deficiency of the privilege (such as, for example, file access priority) of the process execution (S102). The result of this checking is recorded in the repository file 32 (S103).

After having confirmed no deficiency of the privilege of the process execution, the command daemon process module 18 changes the file mode of the objective regular file 33 to WORM (S104). The execution result of WORM commitment is recorded in the same repository file 32 (S105).

FIG. 3 shows a process of the command file which is followed with the command for WORM commitment. The command execution in the WORM commitment via command file 31 has been explained so far. However it is not necessary that the command file 31 includes the command for WORM commitment since the commands other than the other commands can be executed. The details of the process will be discussed later.

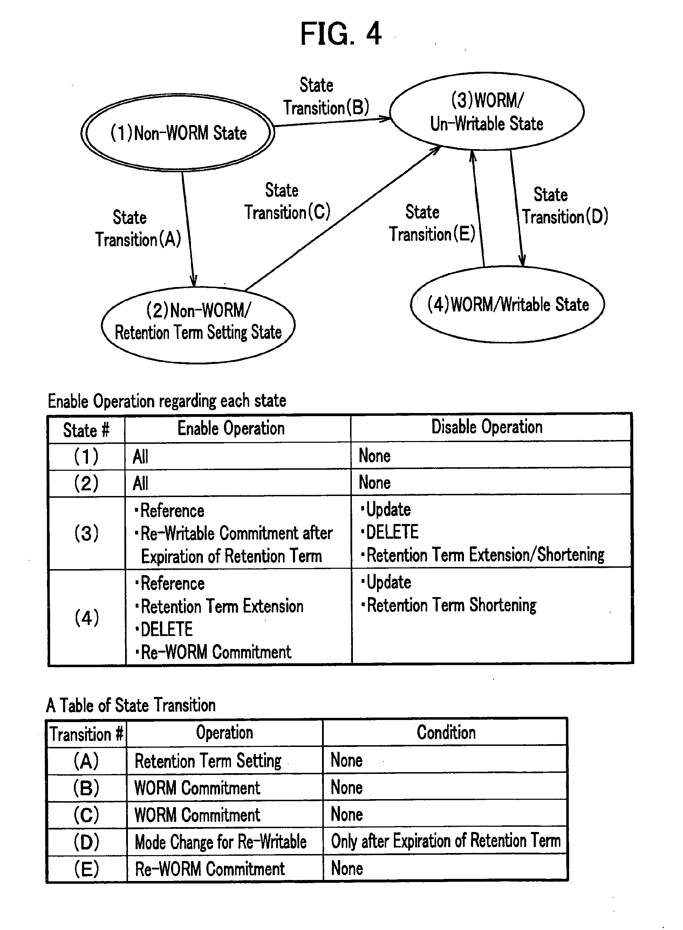

FIG. 4 shows the state transition of files in WORM commitment process. The upper part of FIG. 4 shows the state transition regarding the WORM state for the present embodiment. The lower part of FIG. 4 shows tables of the control capabilities and the control items regarding the transition.

As shown in FIG. 4, the present embodiment should have two non-WORM states (1) and (2) and two WORM states (3) and (4) in the definition. Transitions may be generated among these states. The initial states of the files are non-WORM, which implies the regular file. Non-WORM/retention-term-setting state is a transient state where the state is a state of the regular file however the same retention term is set as long as in the WORM state. Since these two states are the regular file states, all kind of file accesses is possible without any prohibited access to the files.

The WORM Un-Writable state shows the objective file has been the WORM commitment. Therefore, it is possible to read this file but not to rewrite or to erase the file. For this state, only a reference operation is possible but re-Writable is possible after expiring the retention term. The re-Writable does not implies the conversion to the regular files but WORM/Writable state. In the WORM/Un-Writable state, updating, deleting and retention term extending and shortening of the files cannot be executed. The WORM/Un-Writable is the fundamental state for WORM state. The WORM commitment implies the state of the file is transited to the WORM/Un-Writable state.

The WORM/Writable state implies the objective file has been the WORM commitment similar to the WORM/Un-Writable state as discussed before. In this state, the execution of extending the retention term, deleting files and re-changing WORM file mode, that is, WORM recommitment are possible other than the reference operation. The WORM recommitment implies the transition to the WORM/Un-Writable state and not to the WORM/Writable state. For this state, deleting and retention term shortening are prohibited. However, it is possible to create a file which is same as the updated file after the updated file has been deleted and recreate a file which has shorter retention term than the original file even these files are not for the WORM/Writable state.

There are five kinds of control items for the enable control in the transition as shown in FIG. 4.

The transition denoted with (A) corresponds to the change of retention term and the transition from non-WORM state to non-WORM/retention-term-setting state.

The transition denoted with (B) corresponds to the change for WORM commitment and the transition from non-WORM state to Un-Writable state.

The transition denoted with (C) corresponds to the change for WORM commitment as well as the transition denoted with (B). However, the transition from to WORM/Un-Writable state from non-WORM/ retention-term-setting state but not from non-WORM state is made.

The transition denoted with (D) can be made only after finishing the retention term different from other transitions. This transition corresponds to re-Writable commitment as previously described, the transition from WORM/Un-Writable state to WORM/Writable state is made.

The transition denoted with (E) corresponds to the change for WORM commitment as described before. By this transition, a reverse transition against transition (D), such as to WORM/Un-Writable state from WORM/Un-Writable is made.

As having shown in Fig. 4, the mutual transition among the WORM states is possible. However, the transitions from the regular files are accepted for those to finally WORM states and no return to the regular files from the WORM states are made.

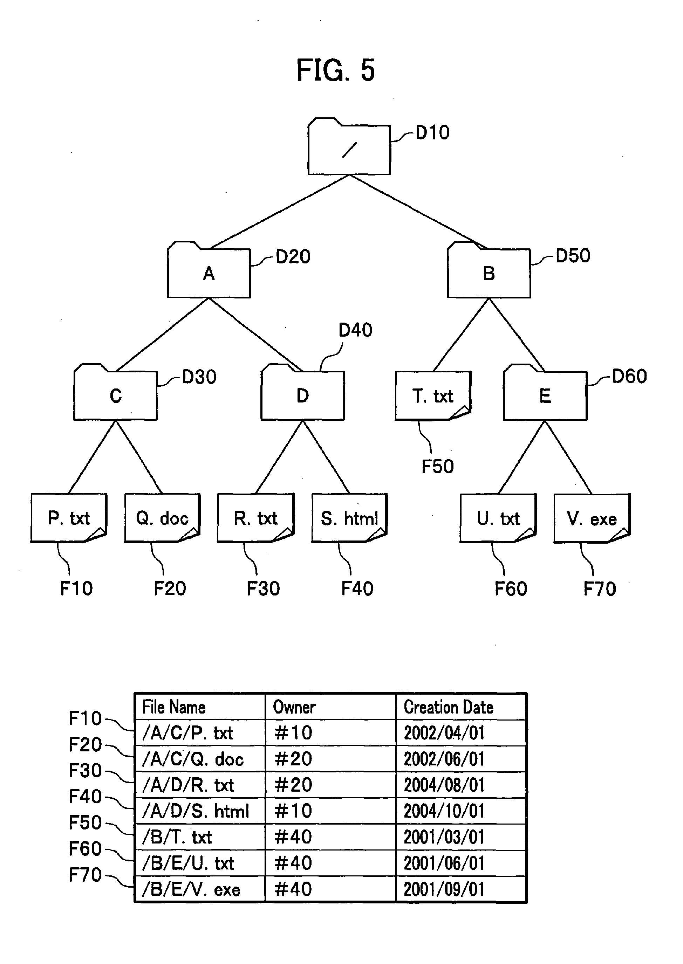

FIG. 5, FIG. 6 and FIG. 7 are for explaining the examples of command which can be used for the command file 31. FIG. 5 shows the directory structure and the file attributes, where files F10 to F70 and directories D10 to D60 are shown. Each file has indexes of the file owner and the date of file creation.

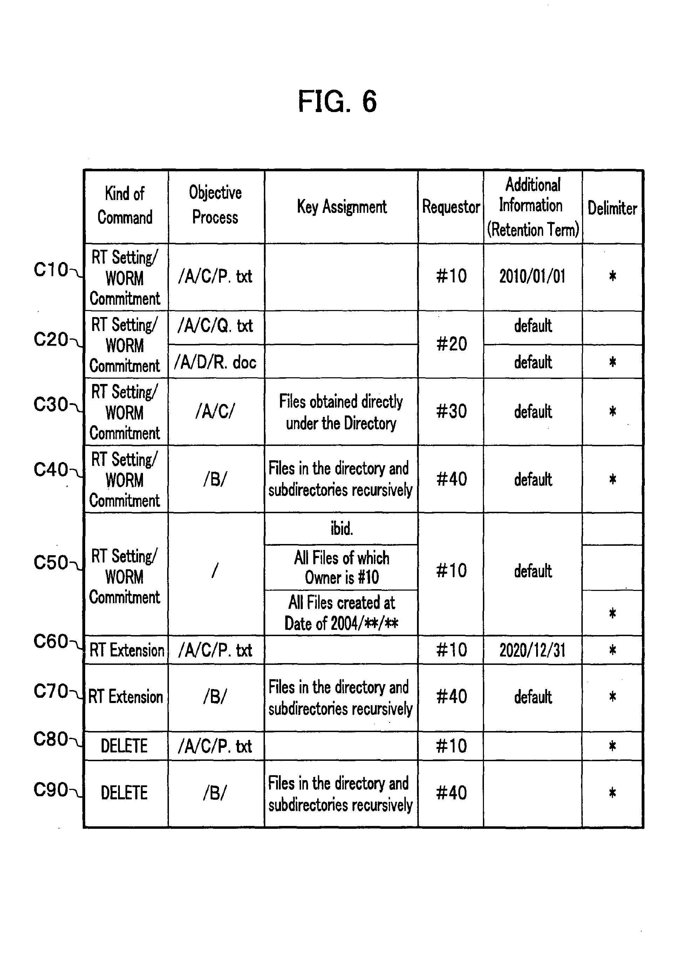

FIG. 6 shows a command system, specifically showing nine commands from C10 to C90, for the commands corresponding to the files and the directories shown in FIG. 5.

The command C10 corresponding to the simplest file where the WORM commitment to set the retention term to the date of "2010/01/01". The request person is "#10" and is same as the owner of the file F10. Therefore the privilege of the execution in the current file access is uniquely determined and no access concurrently collides. The code "*" in the delimiter shows the end of command. At the time when this letter is found in the command interpretation process, the command daemon process module 18 starts the processes which are described in the key assignment.

The command C20 hands plural objective files. The command C20 is a singe command that carries out WORM commitment for two files as F20 and F30 where the retention terms are set to be a "default" value as three years. The command C20 fundamentally includes two commands, each of which directly accesses to the file F20 and the file F30.

The command C30 shows a command that carries out WORM commitment limited in a "default" retention term for the objective files all under the directory D30. The command C40 shows a command that carries out WORM commitment limited in a "default" retention term for the directory D50. For the latter example, WORM commitment is recursively carries out for the files under the directory D50 but those under the subdirectories which are under the main directory D50.

The command C50 includes three commands. The first command is to carry out WORM commitment limited in a "default" term and the objective directory D10. The second command is to carry out WORM commitment in the same condition for all files whose owner is "#10". The third command is to carry out WORM commitment for all files created in the date of "2004/**/**". The command C50 carries out these three commands in a batch process.

The command C60 is to extend the retention term for the files which have been WORM files. The command C60 extends the retention term to be "2020/12/31" of the file F10.

The command C70 is to extend only the retention term of the directory D50. Similar to the example shown in the command C40, all files not only under the directories and but also under subdirectories which are under the directories are recursively searched and are the objective files.

The command C80 is to delete a single file and can delete the files under the subdirectories after recursively surveyed. In order to execute this command, the retention term is first checked and the files can be deleted if retention term has been expired. The commands for deleting files are not necessarily created but can be exploited by the commands used in the regular file systems.

The items in the key assignment for the present embodiment are the file owner, the file creation date and the directory recursively search. But other items than these are possible to use. For example, the assignment of files including specific key words can be the key assignment.

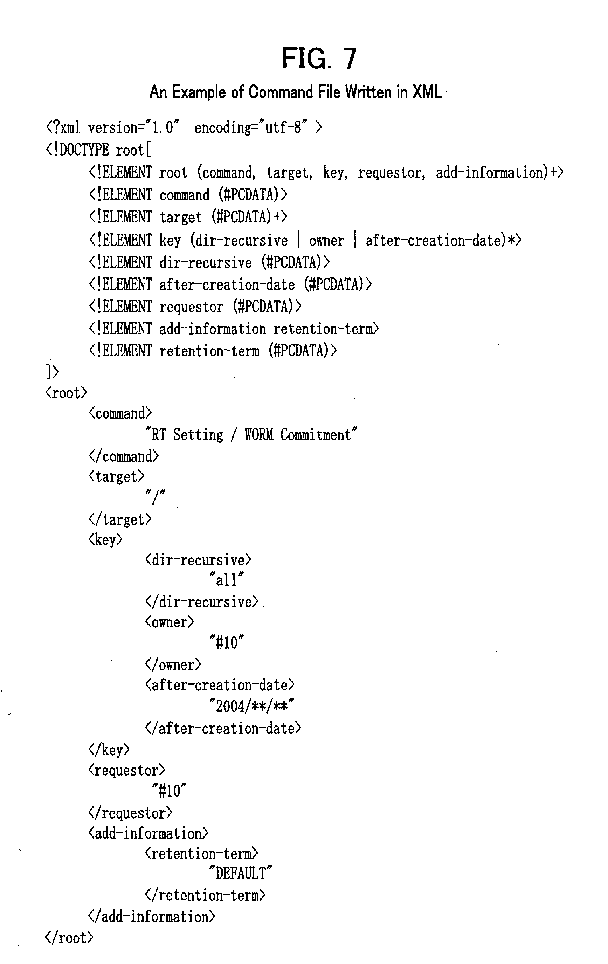

FIG. 7 shows the resultant command file recreated from the command file C60 by using XML (eXtensible Markup Language) . FIG. 7 does not show that the command file C50 is only converted into a file written in XML but the resultant file has a description of an XML declaration and document type definition. Though the present example presented in an XML format, another format or language system such as CSV (Comma Separated Values) and HTML (HyperText Markup Language) can be used for this purpose. The description of the command file is not limited by the use of XML format.

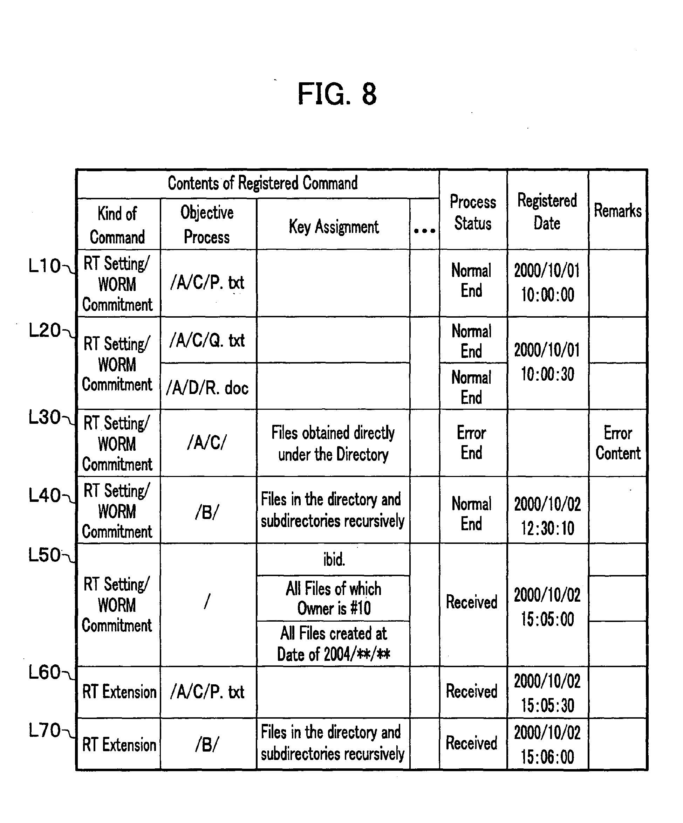

FIG. 8 shows an example of receipt and the result of execution regarding the command to be registered in the repository 32 shown in FIG. 2. As shown in FIG. 8, the content of registered command including at least the kind of commands, the objective processes and the key assignment and the state and the registered date of the corresponding process are recorded. It is preferred to record the error content when the transition is not normally ended, which is shown in the remark column as shown in FIG. 8.

The resultant record as shown in FIG. 8 is an example of the results that is provided after the execution of the example of commands shown in FIG. 6. For example, the record L10 is an example of the execution results regarding the command C10 shown in FIG. 6 and shows that the command has been executed and normally ended at the time of "10:00:00 in 2000/10/01". Similar to the record L10, the records L20, L30, L40, L50, L60 and L70 correspond to the command C20 shown in FIG. 6, the commands C30, C40, C50, C60 and C70, respectively.

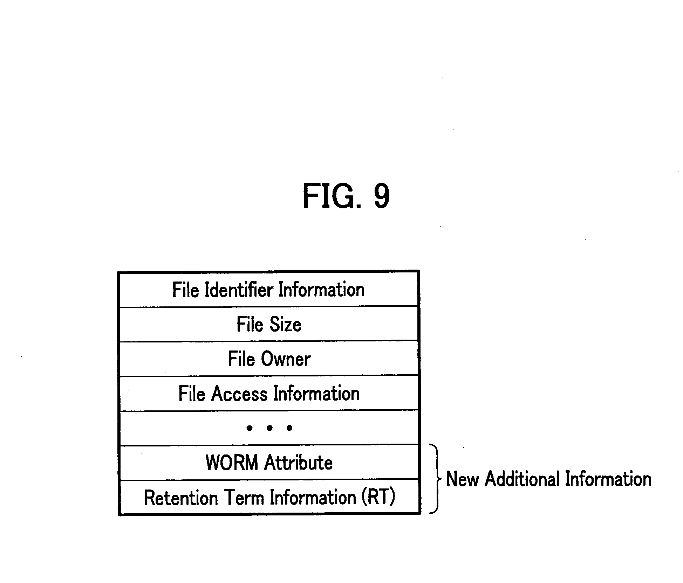

FIG. 9 shows an attribute of the objective files which are under the file system 20 and are to be committed to the WORM status. Even for the WORM commitment, the regular file attribute information such as the file ID information, the file size, the file owner and the file access privilege is used as shown in FIG. 9. New information such as the attribute and the retention term (RT) of the files which are the objects of the WORM commitment are necessary to be at least added to the regular file attribute information.

There are at least two methods to register the new additional attribute. The first one is to register the new additional attribute information to new area of the tables which have been extended from the conventional tables. For this purpose the access method to the extended table has been modified in order to support the access to such the additional attribute information.

The second method is to register the new additional attribute information to the repository file 32 or other equivalent files that are specifically created for recording the attribute and the attribute tables which the files have are used as they are. In this method, it is not necessary to modify the access method to the file system.

The present embodiment can be executed either method. The method to register the new additional attribute information is not a restriction element for the file system access control. There is another method to consolidate all of the attribute information, whichever it is the new attribute for the conventional, in a dedicated file for the whole attribute.

### (Process Operation of WORM Commitment)

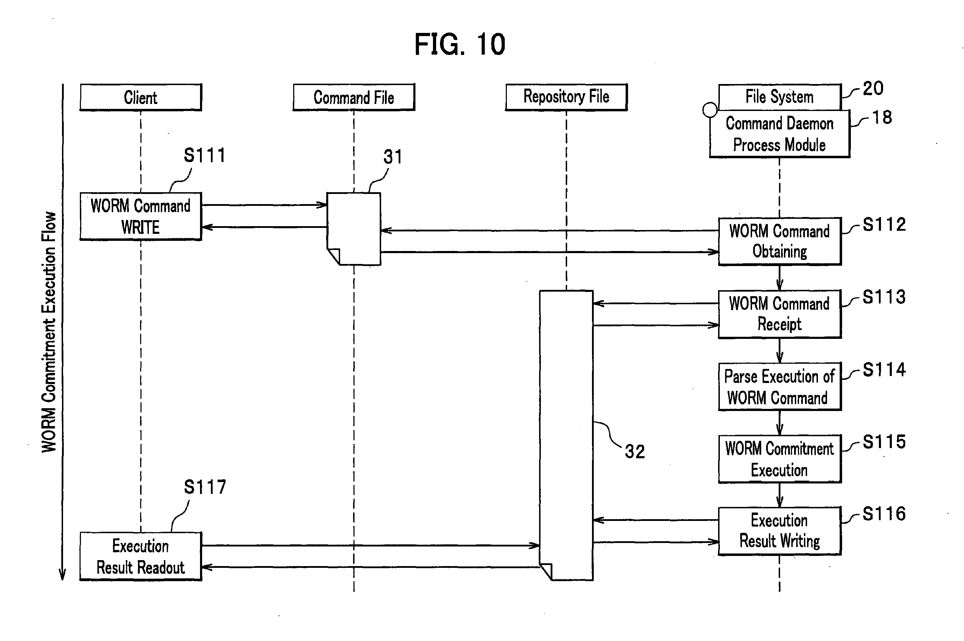

FIG. 10 shows the flow of the process execution in WORM commitment where WORM is carried out in asynchronous scheme. FIG. 10 shows a specific whole flow that a client (for example, NFS client 41, CIFS client 42 etc.) writes a WORM command in the command file 31 and the client obtains the execution result.

The client writes WORM command into the command file 31 (S111) and registers the command file 31 under the management of the file system 20. The command daemon process module 18 obtains the WORM command (S112). Then, the command daemon process module 18 receives the WORM command (S113) and writes the completion of the command file receipt in the repository file 32.

The command daemon process module 18 carries out the parse execution and find the privileges in the commands after command file receipt (S114). If there is no missing of the necessary command, then the WORM commitment is executed (S115) and the results of the execution is written in repository file 32 (S116).

The client obtains the results of the execution written in the repository file 32 in READ operation (S117). The detail steps up to this READ operation will be discussed later.

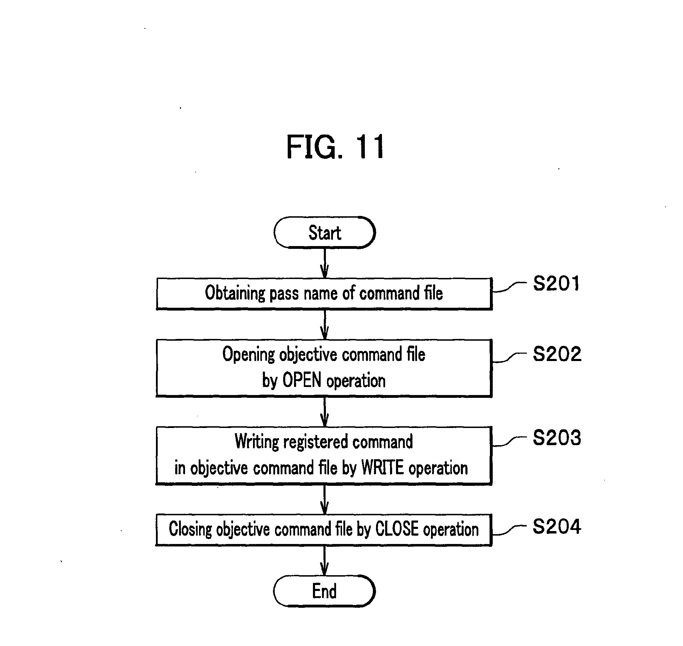

FIG. 11 shows the flow of the command registration. The process described by this flow is the step S111 shown in FIG. 10.

The client accesses the command file under the file system 20 and obtains the pass name of the command file (S201) . The command file 31, which is the objective of the file access, is opened by using the pass name via OPEN operation (S202). After then, the command to be registered is written in WRITE operation in the command file 31 which is the objective for file registration (S203). After then, the command file 31 which is an objective file is closed by a Close operation (S204). In the next step, the command which is appended to the tail of the command file 31 is added to the command file 31. This series of steps is an object or of the daemon process 18.

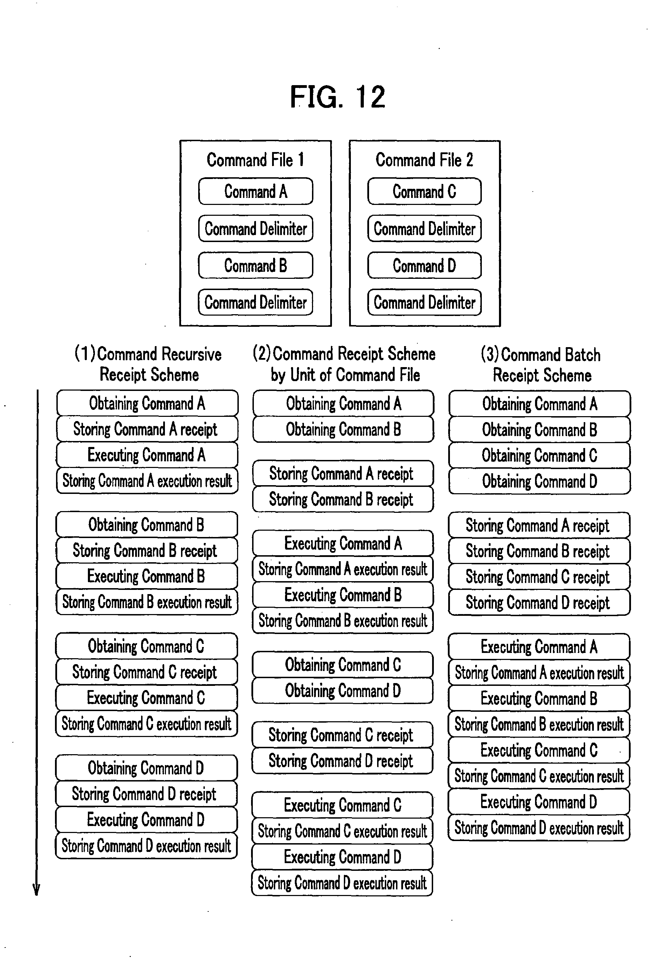

FIG. 12 shows three kinds of processes to process the command by the command daemon process. FIG. 12 shows two command files as command file 1 and command file 2 are registered in this order. The proceeding of the command process is shown for each kind of three processes.

The first process is called command recursive receipt scheme and this process executes the process of the command files in serial order of the commands constructed as in the command files. In this process, the fetch, the receipt registration, the execution and the result registration of the commands are recursively obtained. This first process has the higher atomicity than the other two processes.

The second process is a command receipt scheme by unit of command file. The process execution is carried out after each of the command includes in the command file 1 and the command file 2. FIG. 12 shows the command A and the command B stored in the command file 1 are assembled and the process for the fetch, the receipt registration, the execution and the result registration of the commands are carried out for every assembled two commands. As for the command file 2, the command C and the command D are assembled and the similar processes are carried out. This scheme can be thought as a compromising scheme of the previous the command recursive receipt scheme and the following command batch receipt scheme.

The third scheme is a command batch receipt scheme. The commands are assembled in a serial order of the commands constructed as in the command files without identifying thereof. The process for the fetch, the receipt registration, the execution and the result registration of the commands are carried out in a batch of the assembled commands. This scheme provides the high efficiency of process as a whole.

Since the present embodiment executes an asynchronous operation, three schemes as shown in FIG. 12 are all supported and no restriction of the scheme exists.

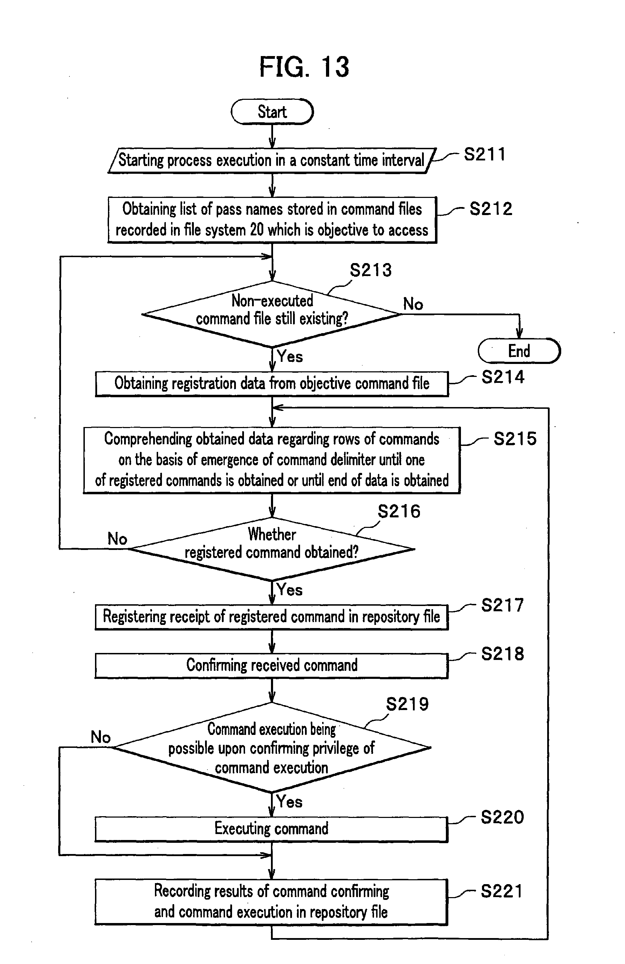

FIG. 13 shows the process flow of the command recursive receipt scheme as shown in FIG. 12. Since the process is asynchronously carried out, the interruption for the process execution starts a series of the process in a constant time interval by using the timer where no trigger starting, such as the initiation by the command registration requested by the client, is used (S211).

After the process has started, the file system access control module 5 obtains the list of the pass names stored in the command files 31 which are recorded in the file system 20 which is the objective to access (S212). Referring to the list of the pass name, the file system access control module 5 checks the existing of the Non-executed command file (S213) as in a file entry. No non-executed command file is found ("No" in S213) and then the process is ended.

If non-executed command file is found ("Yes" in S214), the registration data (that is a series of letters that are the rows of commands) are obtained (S214). After then, the obtained data are comprehended regarding the rows of commands on the basis of emergence of the command delimiter until one of the registered commands is obtained or the end of data is obtained (S215).

The file system access control module 5 checks whether it obtains the registered command (S216). If the registered command has not been obtained ("No" in S216), the process is repeated from the step S21. If the registered command has obtained ("Yes" in S 216), the receipt of the registered command is registered in the repository file 32 (S217). After then, the received command is confirmed in the view of whether the command has the execution privilege (S218).

After confirming the privilege of the command execution, it is checked whether command execution is possible or not (S219). If the command execution is not possible ("No" in S219), the command is not executed and the process proceeds to the process at the step S221. If the registered command is possible ("Yes" in S219), the command is executed (S220).

The results of command confirming and command execution are recorded in the repository file 32 (S221) and the processes are repeated from the step S215.

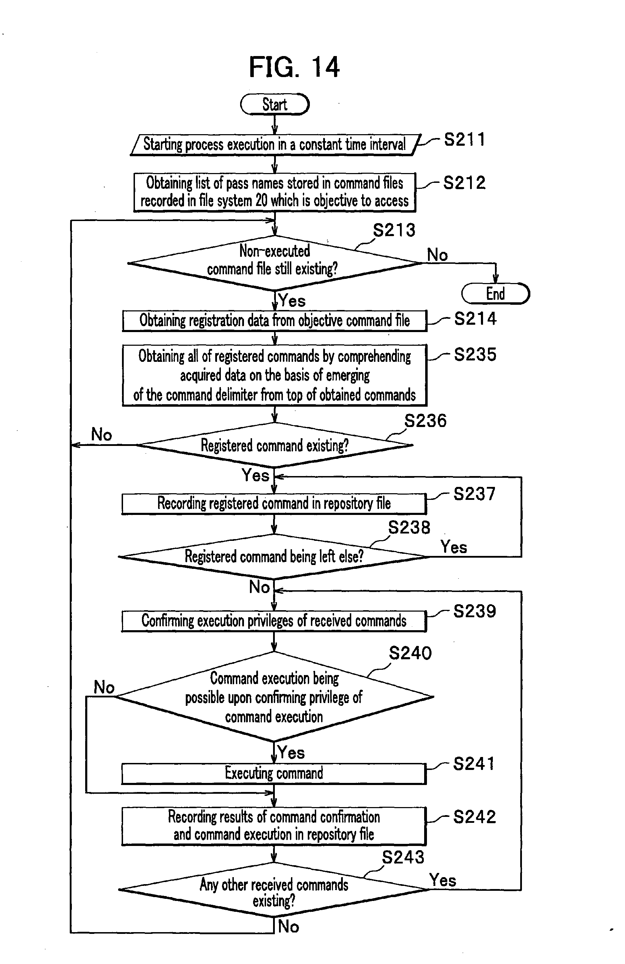

FIG. 14 shows the process in the command receipt scheme by unit of command file. Since the process shown in FIG. 13 has the similar steps to those adopted in the command recursive receipt scheme, the same steps are denoted by the same codes and further explanations are eliminated. The first steps from S211 to S214 are the same steps in the process as shown in FIG. 13, the explanation has been cancelled and the explanation starts with the step S235.

The acquired data consisting of a series of letters that are obtained in the step S214, the file system access control module 5 comprehends the series of the letters until the end of the data in the command file 31 on the basis of emerging of the command delimiter (the letter "*" in this embodiment) and obtains all of the commands in the command file 31 (S235).

In the next step, the existence of the registered command is checked (S236) and the process repeats from the step S213 if the registered command is not obtained ("No" in S236). When the registered command is obtained ("Yes" in S236), the registered command is recorded in the repository file 32 (S237). After then, the existence of the further registered command is checked (S238), the step goes back to the step S237 and record the receipt of registered command in the repository 32 when the registered command is left ("Yes" in S238). These are steps are executed all registered commands. If there is no registered command left ("No" in S238), the received commands are checked whether they have execution privileges (S239).

According to the result of the command receipt in the Step 239, the executability of the command is checked (S240). If the command is not executable ("No" in S240), the step proceeds to the step S242 without executing the command. If the command is executable ("Yes" in S240) and then the command is executed (241).

After executing the commands, the results of the command receipt and the command execution are recorded in the repository file 32 (S242). After then, the existence of the received commands is checked (S243). If the other received commands exist ("Yes" in S243), the step repeats from the step S239. If any other commands are left ("No" in S243), the step repeats the process from the step S213 and then a new command file 31 is processed as explained above.

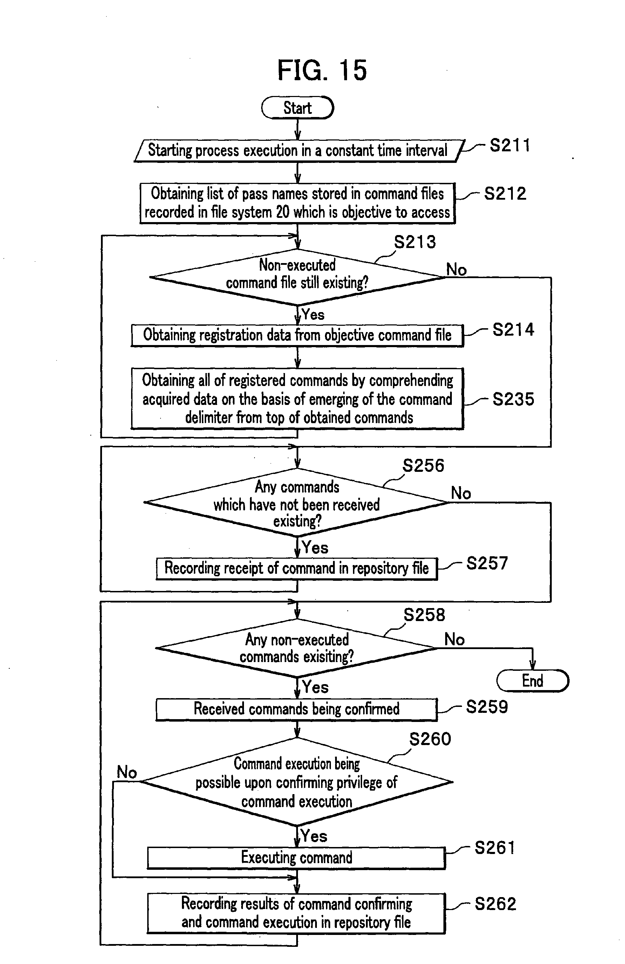

FIG. 15 shows the process of the command batch receipt scheme which has been shown in FIG. 12. The common steps to those used in FIG. 13 and 14 are re-used with the same codes. The details of the common steps are not repeatedly explained. The steps S211 to S214 are same as steps S211 to S214 in FIG. 13. The step S235 is same as that given in FIG. 14. The further explanation for this step is cancelled. The explanation begins at the time when the process of the step S235 has been completed.

After the S211 has started, the process from the step S212 to the step S235 are to read out the command files. When the process has completed up to the step S235, one command file 31 is read out and the commands included in the command file 31 have been obtained. After completion of the step S235, the step goes back to the step S213 and repeats the process. The repetition of the steps from the step S213 to the step S235 can obtain all of the commands in all command file 31 and the step goes to "No" in the step S213 and the steps after S213 begins.

After obtaining the commands, the commands which have not been received are checked (S256). If there are non-received commands ("Yes" in S256) through checking by demon process, the command is once received and the receipt of the command is recorded in the repository file 32 (S257). After then, the steps from the step S256 are repeated.

After checking the non-received command in the step S256, the process goes to the next step if no non-received command is left.

After the daemon process has read out one of the received commands, the existence of the non-executed commands is checked (S258) If there are no non-executed commands left ("No" in S258), the process ends. The received commands to be objective are confirmed in the view of having the execution privileges (S259).

After the confirmation, the executability of the command is checked (S260). If the command is not executable ("No" in S260), the step proceeds to the step S262 without executing the command. If the command is executable ("Yes" in S261), the command is executed (S261)

After executing the command, the results of the command receipt and the command execution are recorded in the repository file 32 (S262). After then, the steps are repeated from the step S258 and new commands are processed.

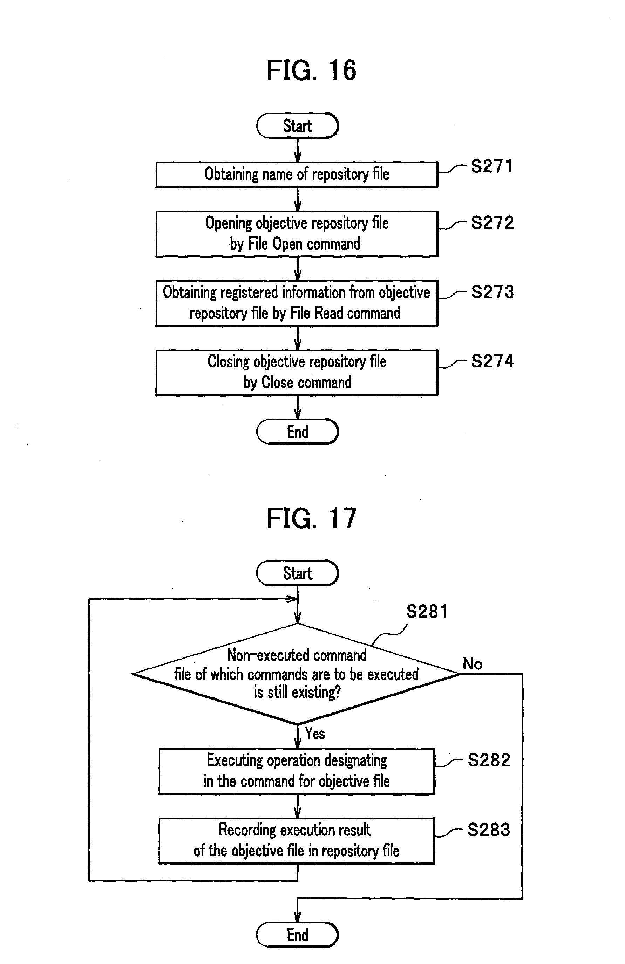

FIG. 16 explains the process that is to obtain the repository information from the repository file. This process is substantially same as READ process of the regular files. In this process, the user of the daemon process accesses the file system 20 and obtains the name of the repository file (S271). Then the daemon process opens the objective repository file 32 by File Open command with the name of the obtained file (S272). Then the registered information is obtained from the objective repository file 32 by File READ command (S273). After finishing to read the necessary registered information, the objective repository file 32 is closed by Close command (S274) and the process is ended.

FIG. 17 shows the command execution process for the case when the objective is a file. The command includes the WORM command but other commands can be included. It is confirmed whether the file includes the non-executed commands (abbreviated as "non-executed commands", hereinafter) among the files of which commands are to be executed (S281). If there is a non-executed file ("Yes" in S281), the command is executed for the objective file (S282). According to the recording method regarding the result, if necessary, the execution result of the file is recorded in the repository file 32 (S283) and then the process for the next objective file is repeated from the step S281. If no non-executed files are left ("No" in S281), the process is ended.

There are two modifications of the embodiment for the objective files in which the commands are to be processed. The first modification shows the method to lock the objective files to be executed. Before executing a command, the objective file to be executed is locked and excluded the execution provided by the commands other than the command that is to be executed. Then the command is executed and the lock is released after the command is executed. For the case shown in FIG. 17, the step S282 is the step for executing a command. The objective file is locked before the step S282 and the objective file is unlocked after the execution of the step S282 has been done.

In the second modification, a series of commands that are to access to a file fail to be executed and the following processes are cancelled. In the case shown in FIG. 17, when the execution of the command fails after the result of the command execution is recorded in the repository file 32 in the step S283, the subsequent processes are cancelled afterwards.

A modification with adding lock command and a cancellation to execute the subsequent processes can be combined. However, it is necessary to adopt the corresponding modification that supports the similar processes for those that are for the directories.

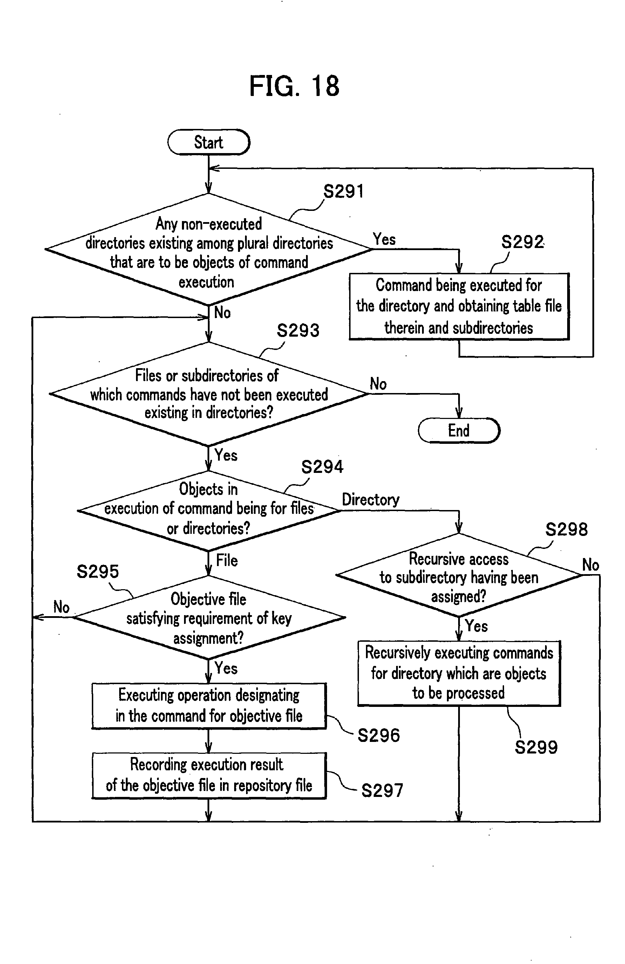

FIG. 18 shows the command execution for the objective directory. For the case that the directories are the objectives, there are two cases; the files directly under the directories are the objects to be assigned and the subdirectories included in the directories are the objects to be recursively assigned. The processes shown in FIG. 18 correspond to both cases. It is possible to assign only one directory to be an object and plural directories to be concurrently assigned and to be processed in a batch process.

The existence of non-executed directories is checked among one or plural directories that are to be the objects of the command execution (S291). The objective directory includes only one or plural directories that are assigned to be objects of the command execution. But the objective directory does not include the directories that are obtained by recursively search in the directories assigned by the command.

If the directory includes non-executed commands ("Yes" in S291), the command is executed for this directory and the table of the file therein and the subdirectories is obtained (S292) and the process for the directories including the non-executed commands is repeated from the step S291.

One or plural directories which are the object for the command execution has no directories that include non-executed commands ("No" in S291), the step proceeds to the process to execute the commands given to the files and directories that are included in each directory to be explained in the following.

In these processes, the existence of files or subdirectories of which commands have not been executed is checked for the directories which are directly assigned by the commands as the objects to be processed (S293). If the commands have been executed for all of the files and directories ("No" in S293), the process is ended. If there is a file or a directory that includes the non-executed command ("Yes" in S293), it is checked whether the objects in the execution of the command are for files or directories (S294).

If the object in the execution of the command is a file ("File" in S294), the objective file is checked whether it satisfies the requirement of the key assignment (S295). The key assignment in this step is, for example, the file owner and the file creation time (time stamping) and the step S295 checks whether these conditions are compliant to the requirement. More concretely, the check as whether the file owner coincides with the owner who is in the requirement.

If the key assignment is not satisfied ("No" in S295), the command is not executed and the process is repeated from the step S293. If the key assignment is satisfied ("Yes" in S295), the command is executed for the objective files (S296) and the result of the command execution is recorded in the repository file 32 (S297). After then, the process repeats from the step S293. The step S297 may be cancelled or executed if the execution is required for the case that the archival format of the results of command execution of the designated command is necessary.

If the object of the command execution is a directory ("Directory" in S294), it is checked whether a recursive access to the subdirectory has been assigned (S298). If a recursive operation is not assigned ("No" in S298), the process repeats from the step S293. If the recursive process is assigned ("Yes" in S298), the commands are recursively executed for the directors which are the objects to be processed (S299). The process is repeated from the step S293 to the step S299 until no subdirectories come out and the commands have been executed for all objective files and directories.

Similar to FIG. 17, two more modifications are provided for the embodiment shown in FIG. 18. The first modification is to lock the files included in the directories to be the objects of the execution. The file included in the directory which is the object for the command execution is locked and then the command is executed. The lock is released after the command execution. FIG. 18 shows that the step S296 is the command execution step and the objective file is locked before the step S296 and the lock is released after the step S297 has been executed.

In the second modification, the execution is cancelled when a series of the commands fails in the processes before command completion. For the case shown in FIG. 18, the process is ended without further executing the subsequent commands when the commands fail in the process before command completion.

It is possible to integrate two modifications such as the further processes are cancelled in the case when the lock or the command failure before the command completion. However the file process to the corresponding files has to adopt the similar modification,

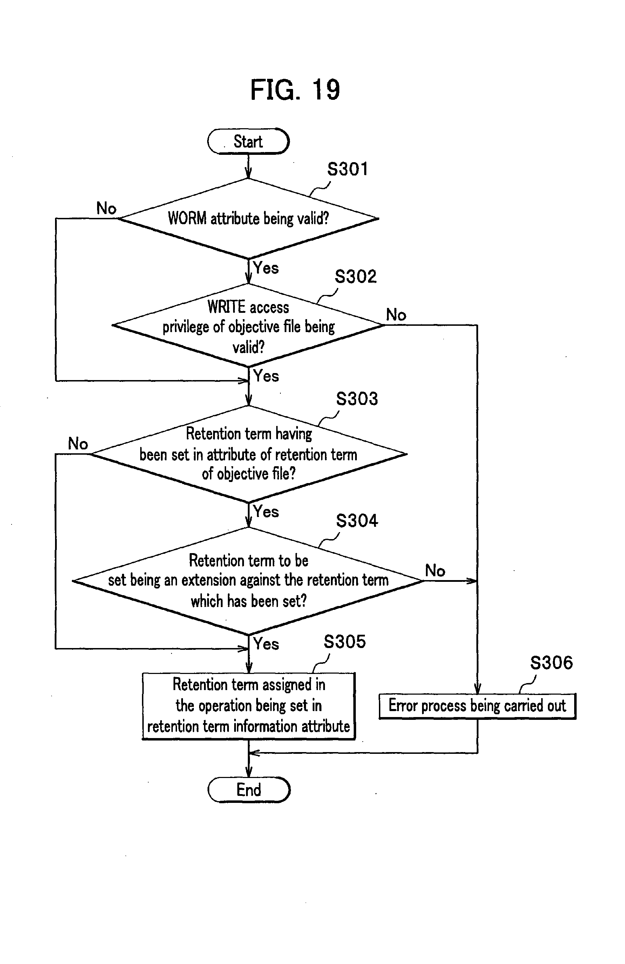

FIG. 19 shows the process of setting and extending file retention terms regarding WORM files. For this process, the validity of the WORM attribute is checked (S301). As the result, the step S302 does not execute and the step proceeds to the step S303 if the WORM attribute of the objective step is invalid ("No" in S301). If the WORM attribute is valid ("Yes" in S301), it is checked whether the WRITE access privilege is valid or invalid (S302). As the result, an error process such as to record the process terminated in error in the repository file (S320) and the processes are ended if the WRITE access privilege is invalid ("No" in S302). If the WRITE access is valid ("Yes" in S302), the step proceeds to the step S303.

In the step S303, the attribute of the retention term of the objective file is checked whether the retention term has been set or not (S303). As the result, the step S304 is not processed and the step proceeds to the step S305 if the retention term has not been set ("No" in S303). If the retention term has been set ("Yes" in S303), the retention term to be set is checked whether it is an extension against the retention term (S304). As the result, an error process such as to record the process terminated in error in the repository file (S306) and the processes are ended if it is not an extension against the retention term ("No" in S304). If it is an extension of the retention term ("Yes" in S304), the subsequent step S305, to be explained in detail, starts.

In the step S305, the retention term assigned in this step is set and the processes are ended. The successful completion of the process is recorded in the repository file 32 if required for the record archival.

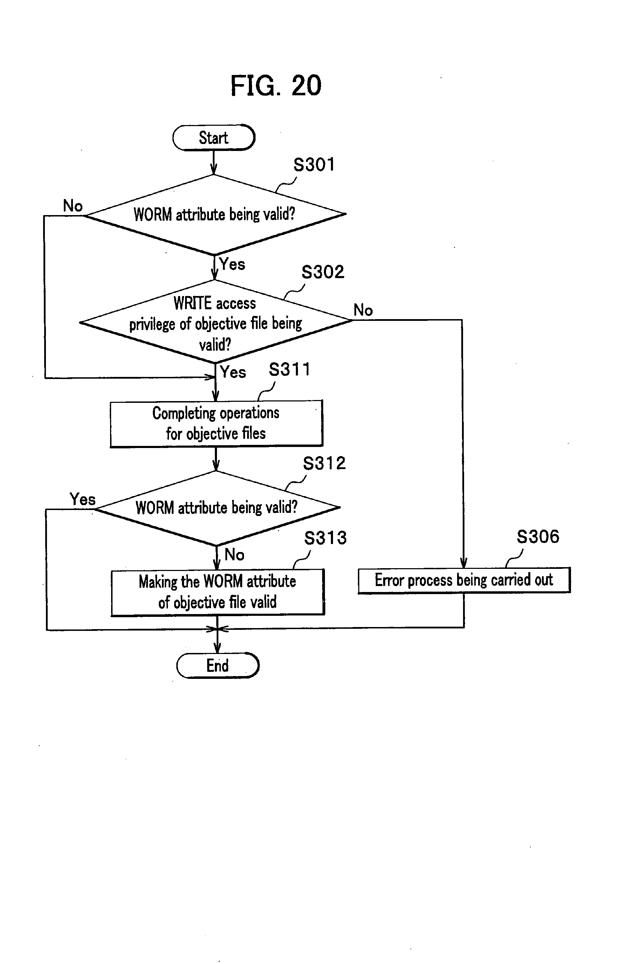

FIG. 20 shows the processes for WORM commitment for the files. Since some of the steps shown in FIG. 20 are same as those in FIG. 19, they are explained with the same denoted codes.

The steps S301, S320 and S306 are same processes shown in FIG. 19 and not explained. The updating control, that is, the objective files which are possibly hold in the memory is to be stored in the external storage device 7, is completed (S311) if the WRITE access privilege is valid ("Yes" ion S302) even when the WORM attribute is valid.

In the next step, it is checked whether the WORM attribute is valid or not (S312), a process to make the WORM attribute of the objective file is carried out (S313) if the WORM attribute is not valid ("No" in S312). The process is ended as it is if WORM attribute is valid.

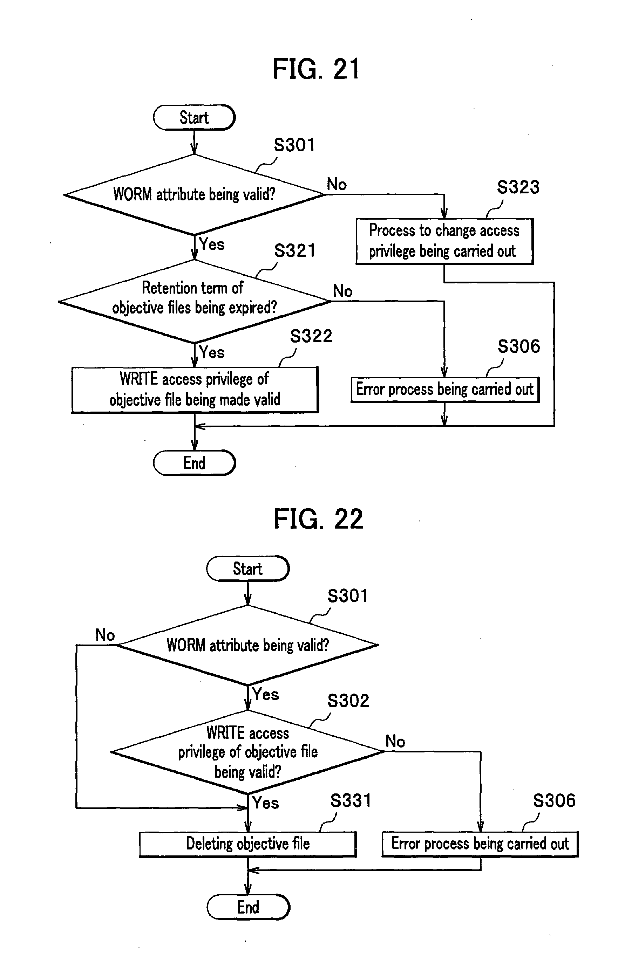

FIG. 21 shows the process of Re-Writable of the file. Since some of the steps shown in FIG. 21 are same as those in FIG. 19, they are explained with the same denoted codes and some of the explanation is omitted. More concretely, the steps S301 and S306 are the same ones shown in FIG. 19.

To begin with, the objective files are check in terms of whether the WORM attribute is valid or not (S312). The process to change the access privilege for the regular files (s323) if WORM attribute is not valid ("No" in S301), which implies the file is not the object for Re-Writable.

If WORM attribute is valid ("Yes" in S301), the retention term of the objective files is checked in terms whether it is expired or not (S321). If the retention term is not expired ("No" in S321), the error process is carried out (S306) because Re-WRITE cannot be executed. Then the process is ended. If the retention term is expired ("Yes" in S321), the WRITE access privilege of the objective file is made valid (S322) and the process is ended.

FIG. 22 shows the DELETE process of the file which has been changed of the file access mode. Since some of the steps shown in FIG. 22 are same as those in FIG. 19, they are explained with the same denoted codes. As shown in FIG. 22, the daemon process checks the DELETE is possible or not on the basis of the access privilege of the objective file. The DELETE is executed (S331) if the file has a DELETE capability ("No" in S303 or "Yes" in S302). The error process is executed (S306) and the process is ended if the DELETE is not allowed.

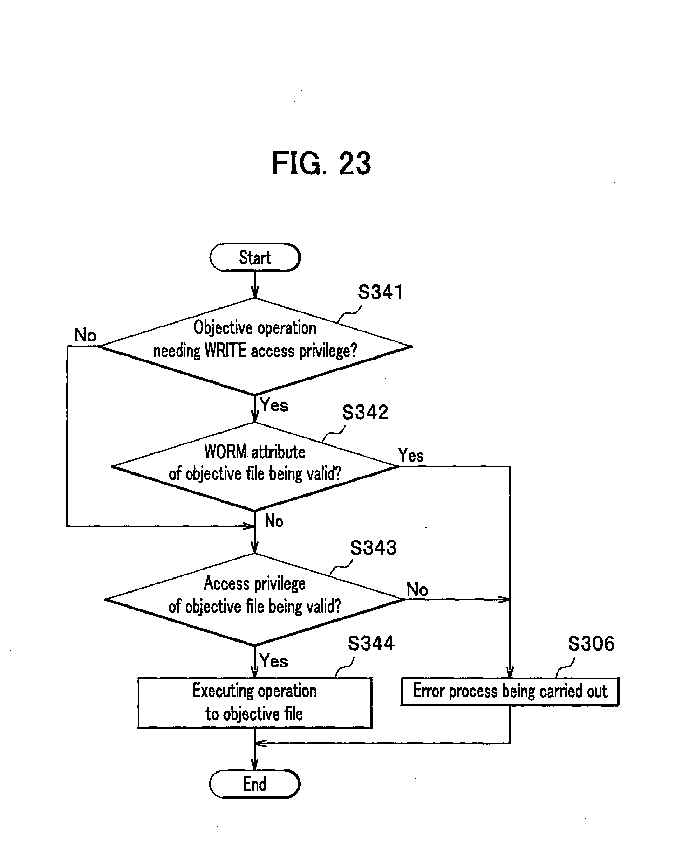

FIG. 23 shows a process to prevent the alternation of the files which have been frozen as WORM files. In other words, FIG. 23 shows a method to appropriately process the access to the WORM files. Since the step S306 shown in FIG. 23 is same as the step S306 shown in FIG. 19, no further explanation is given and the same code for the step is to be used.

In the access to the WORM files, the command is checked for whether the objective operation needs WRITE access privilege (S341). If WRITE access privilege is not needed ("No" in S341), the step proceeds to the step S343. If WRITE access privilege is needed ("Yes" in S341), the validity of WORM attribute of the objective file is checked (S342). As the result, the error process such as to record the process terminated in error in the repository file (S306) and the processes are ended. If the WORM attribute is not valid ("No" in S342), the step proceeds to S343.

At the step S343, the objective file is accessed and the accessibility is checked, as usual, whether it is possible or not (S343). If the access is not possible ("No" in S343), the error process such as to record the process terminated in error in the repository file (S306) and the processes are ended. If the access is possible ("Yes" in S343), the objective file is executed (S344) and the process is ended.

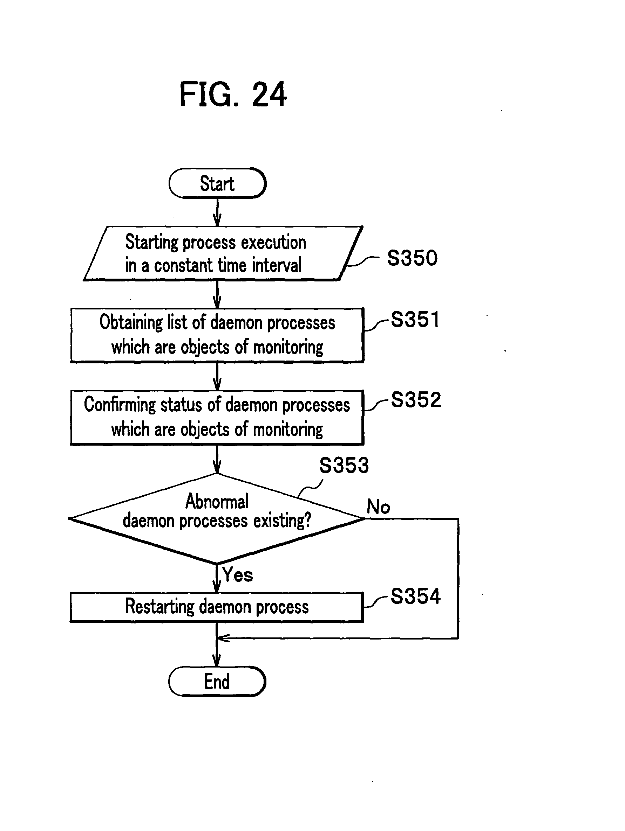

FIG. 24 shows a process to monitor the daemon process which is triggered in constant time interval (such as CRON process in UNIX (a trade mark)). The process is called a daemon process monitoring process.

The daemon process monitoring process starts and is carried on in a constant time interval (S350). Such operation can be done by a well-known technology such as process interruption by the timer signal generated by the computer. When the process starts the execution, a list of daemon processes which are the objects of the monitoring is obtained (S351). This process is preferred to have a capability such that the list is kept in a particular file and is read out on necessity. In the next step, the status of the daemon processes which are the object of monitoring is confirmed (S352). In this confirmation, the presence of abnormal daemon processes is checked (S353). If there is no abnormal daemon process ("No" in S353), the process is ended. If there is an abnormal daemon process ("Yes" in S353), the daemon process is restarted (S354) and the process is ended.

We have been explaining the asynchronous mode change for WORM by using daemon process regarding embodiments of the present invention. However, there are variations of the embodiments, some of which have already been explained. We will discuss a variation that is a synchronous WORM commitment using a similar command daemon process module to the command daemon process module 18.

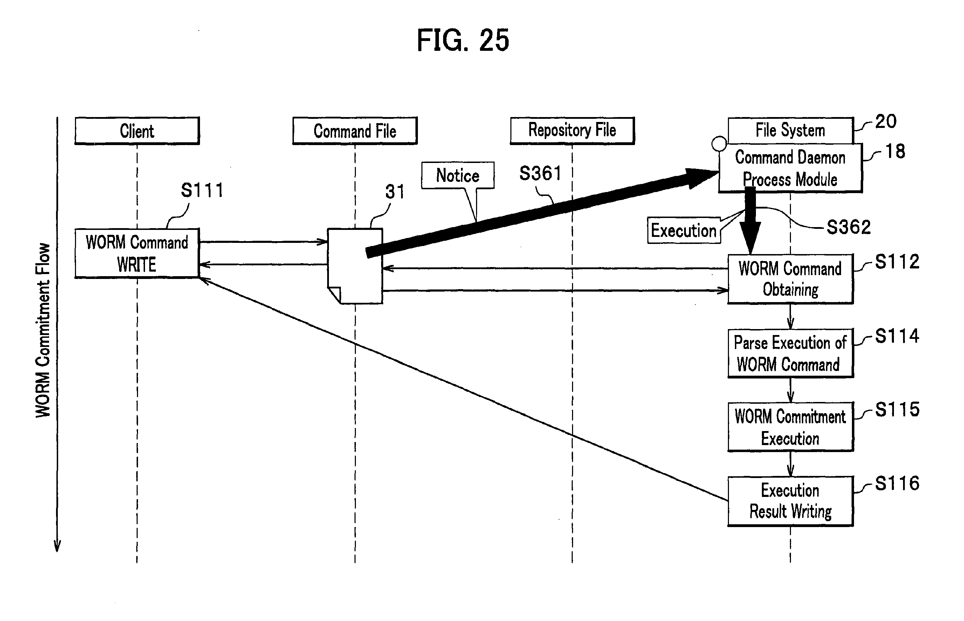

FIG. 25 shows an intra-system function flow in the synchronous operation using the command daemon process module 18. FIG. 25 is similar to FIG. 10. Since some of the steps shown in FIG. 25 are same as those in FIG. 10, they are explained with the same denoted codes. We will explain the steps and processes which are different from those shown in FIG. 10.

The flow steps in FIG. 25 are seen in such a view that the steps S361 and S362 have been added to FIG. 10.

The step S361 is a process that the process which writes the data sends such a notice to the command daemon process module 18 that the file system has detected the data WRITE into the command file 31 when the command file 31 is written (S361) in the data. The command daemon process module 18 can immediately execute the WORM command obtained by writing into the command files 31 (S362). By this execution, the synchronous operation is possible in substantially same structures as the case of an asynchronous operation other than in such case that the command daemon process module 18 starts the process in corresponding to the notice. The synchronous operation which does not need the command daemon process module 18 will be explained in details in the explanation of the second embodiment.

### (Second Embodiment)

### (Fundamental Embodiment using Synchronous Operation)

In the first embodiment, we have discussed an asynchronous operation using the command daemon process module 18. However the present invention is not confined in this embodiment. As the second embodiment, a synchronous operation can be considered. The state transition in the synchronous operation in the second embodiment may be slightly different from the first embodiment in terms of the practical convenience of the operation. However the fundamental system concept of the state transition of the second embodiment is same as that of the first embodiment. The second embodiment is the system constructed with that of the first embodiment excluding the command daemon process module 18. The details of the second embodiment are going to be discussed as follows.

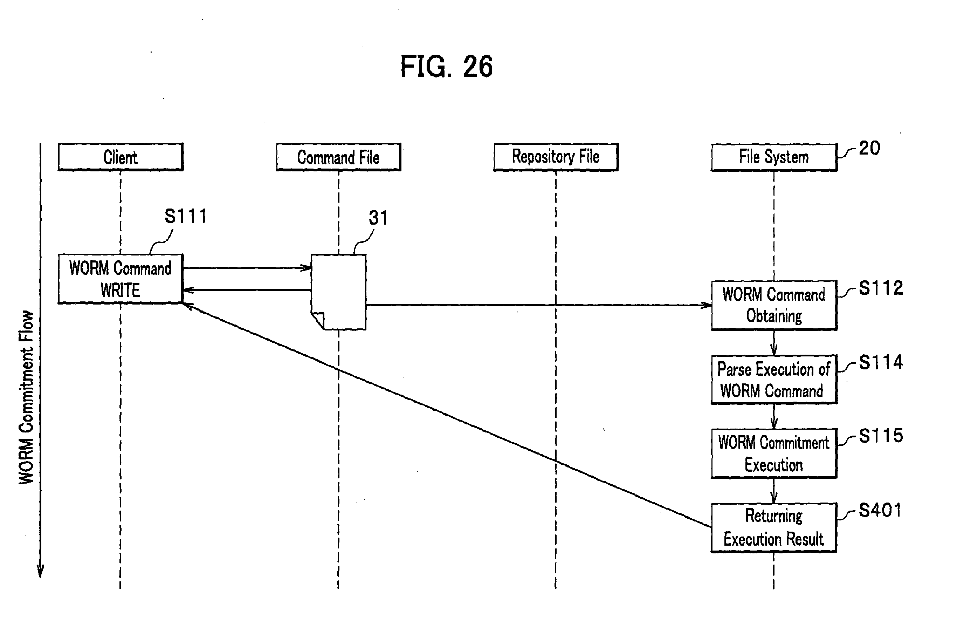

FIG. 26 shows an intra-system function for the WORM commitment execution flow. Being similar to FIG. 10, FIG. 26 shows an overall process that a client (for example, an NFS client, a CIF client 42 etc.) writes WORM command and then returns the execution result to the client. The process steps shown in FIG. 26 are common to those shown in FIG. 10. Since some of the steps shown in FIG. 26 are same as those in FIG. 10, they are explained with the same denoted codes. We will explain the steps and processes which are different from those shown in FIG. 10.

Since the process from WRITE of WORM command by the client (S111) to WORM command obtaining (S112) is the same processes, no further explanation is cancelled. The content of the process as shown in FIG. 10 is same as that of the process shown in FIG. 26. However the subject of the operation is the file system access control module 5 and not the command daemon process module 18. In other words, it is necessary to alternate the process which the command daemon process executes with other programs in case that the synchronous operation is executed. In the second embodiment, the process executed by the command daemon process module 18 is carried out by the file system access control module 5 and the file system access control module 5 calls the function of the WORM access control module 15.

The file system access control module 5 does not process the step S113 which is done in the asynchronous operation but the content of the received command is confirmed and the existence of execution privileges is checked (S114). If there are no problems in these operations, WORM commitment is subsequently carried on (S115) and the results of the execution is returned to the client (S401).

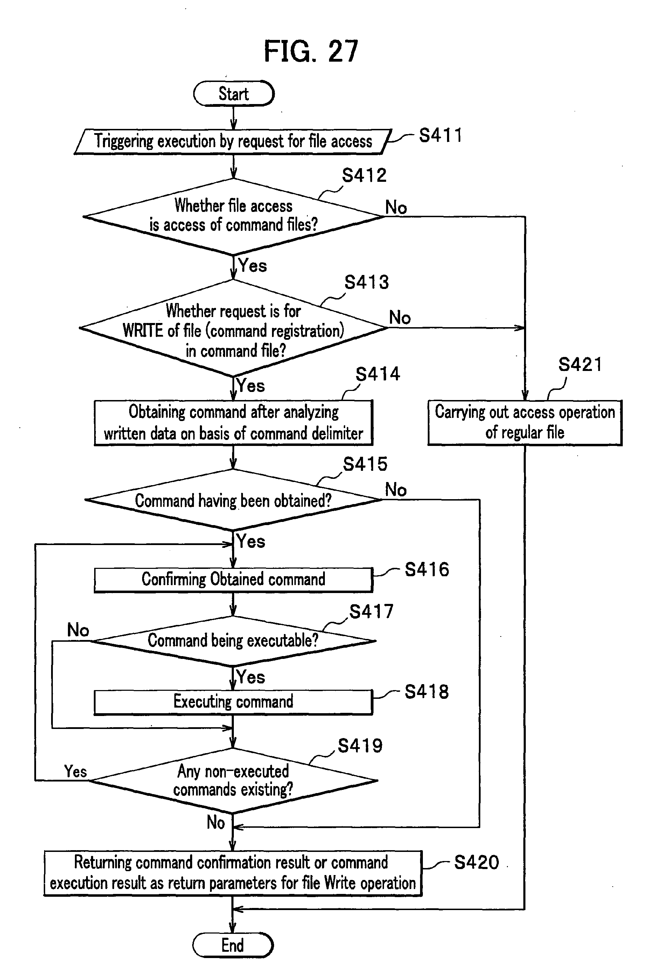

FIG. 27 shows the process of the registration command for the file access which is executed in the synchronous operation (the second embodiment). The file access in the present embodiment includes the access to the regular files 33 as well as READ or WRITE access to the command file 31.

This process triggers the execution by the request for the file access (S411). It is checked whether this file access is an access of objective files (S412). The judgment is performed by checking whether the file attribute is intrinsic to the command files or whether the file name is one of the reserved file names for the command files. As the result, if the command file 31 is not the object ("No" in S412), the access operation of the regular file 33 is carried out (S421) and the process is ended.

If there is a request of access to the command file 31 ("Yes" in S412), the request is checked regarding whether the request is for WRITE of file (a command registration) into the command file 31 (S413). If the request is not for WRITE of file ("No" in S413), the access to the regular file 33 is carried out (S421) and the process is ended. If there the request is WRITE of files to the command file 31 ("Yes" in S413), the command is obtained after analyzing on the basis of the command delimiter (S414)

In this analysis, it is checked whether the command has been obtained (S415). As the result, if the command is not obtained ("No" in S415), the command confirmation results including the fail and the command execution result are returned as return data (S420) and the process is ended. If the command is obtained ("Yes" in S415), the obtained command is checked in terms of whether it is execution privilege (S416). As the result of the confirmation, it is checked whether the command is executable or not (S417). If the command is executable ("Yes" in S414), the command is executed (S418) and the step proceeds to the step S419. If the command is not executable ("No" in S417), the step proceeds to step S419.

In the next step, the existence of non-executed commands is checked (S419). If there is a non-executed command ("Yes" in S419), the next command execution repeats from the step S416. If there is no non-executed command ("No" in S419), the command confirmation result and command execution result including success or failure are returned as return parameters (S420) and the process is ended.

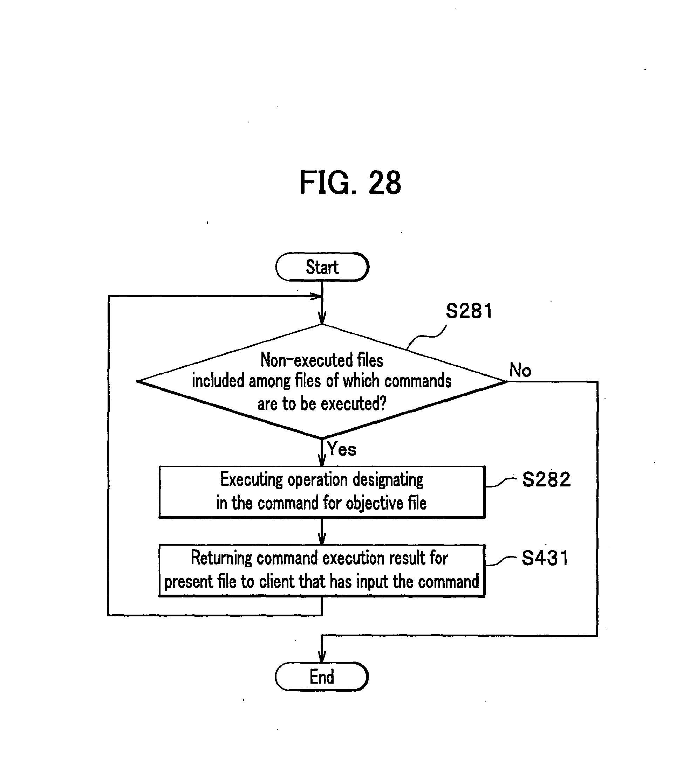

FIG. 28 shows the execution of the command for the objective files in the synchronous operation (the second embodiment). Since the process shown in FIG. 28 includes the steps that carry out the same as those for the command execution processes for the asynchronous process (the first embodiment) as shown in FIG. 17, we will cancel the explanation but use the same denoted codes.

As shown in FIG. 28, the difference between the execution process of the commands in the synchronous operation (the second embodiment) and the execution process of the commands in the asynchronous process (the first embodiment) shown in FIG. 17 is only the step S431 which is to handle the execution result and the rest processes are same. In the step S431, the command execution result for this file is returned to the client that has input this command (S431). For the case of asynchronous operation, the difference from the synchronous operation is that the subject that carries out the operation has been changed to the file system access control module 5 from the command daemon process module 18 since the command execution result is recorded in the repository file 32, which is not a large difference.

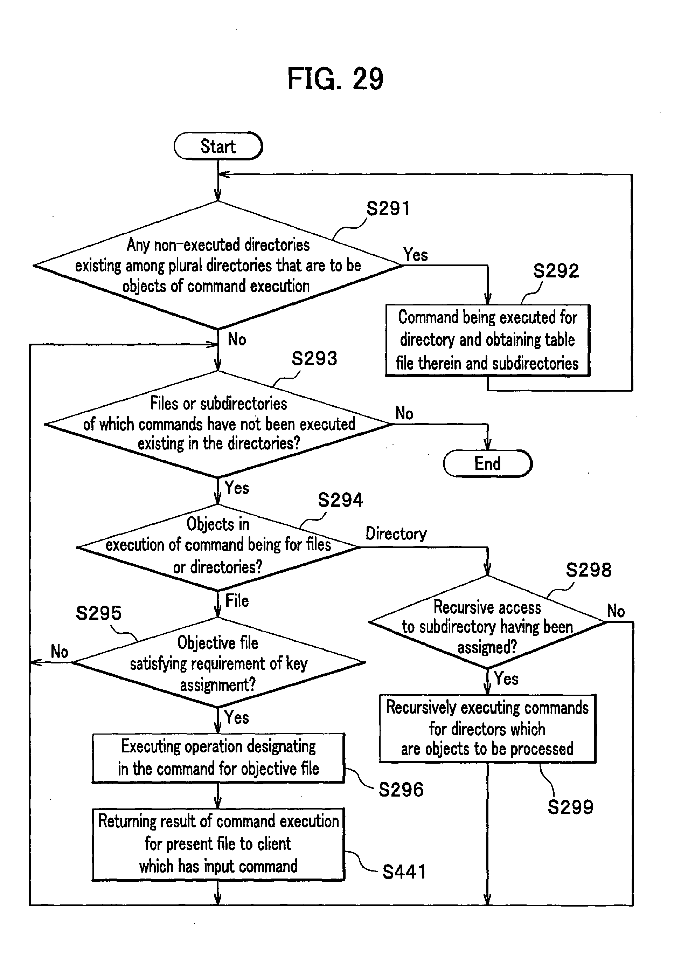

FIG. 29 shows the command execution process for the objective directories in the synchronous operation (the second embodiment). Since the process shown in FIG. 29 includes the steps that carries out the same process as those for the command execution processes for the asynchronous process (the first embodiment) as shown in FIG. 18, we will cancel the explanation but use the same denoted codes.

Similar to the case for the command execution process for the objective file in the synchronous operation (the second embodiment) as explained using FIG. 28, the difference is in the step S441 that handles the execution result and the rest processes are same. In this step S441, the result of the command execution for the file is returned to the client which has input the command (S441). For this case, the subject of the operation is the file system access control module 5 and not the command daemon process module 18.

As we have been explaining, even in the second embodiment where the synchronous operation is executed without assistance of the command daemon process module 18, the substantial part is approximately same as the embodiment using the asynchronous operation which is carried out with the assistance of the command daemon process as explained in the first embodiment. Therefore the substantial part is not limited by the embodiment.

### (Other embodiment)

There are various other embodiments than the first and the second embodiments. As have been found in the comparison with the first and the second embodiments, these embodiments are substantially the same ones. Further preferred embodiments will be explained in the followings.

### (Variations for WORM State)

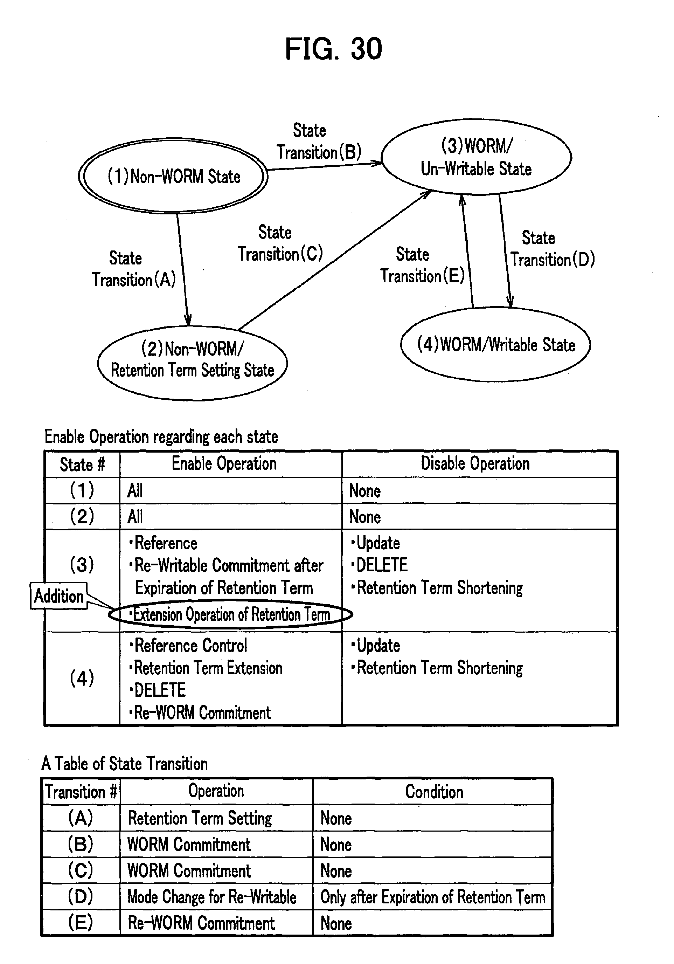

The variations for WORM state of files and directories, which may be different from FIG. 4, are explained. The WORM state provided by the first and second embodiments has four states as shown in FIG. 4, five state transitions, enable control and disable control. In FIG. 30 to FIG. 32, the variation of the selection of the states, enable control and disable control in such states are shown.

FIG. 30 shows a variation regarding WORM state. The WORM state in FIG. 30 is different from that of the first embodiment and the difference is denoted by an elliptic circle. The retention term extension control is removed from the disable control but is added to the enable control in the state of WORM/Un-Writable. By this variation, it is possible to extend the retention term in the time when the retention term has not been expired. The setting of the enable control and the disable control is not limited in this variation shown in Fig. 30. For example, updating control may be set in the state of WORM/Un-Writable.

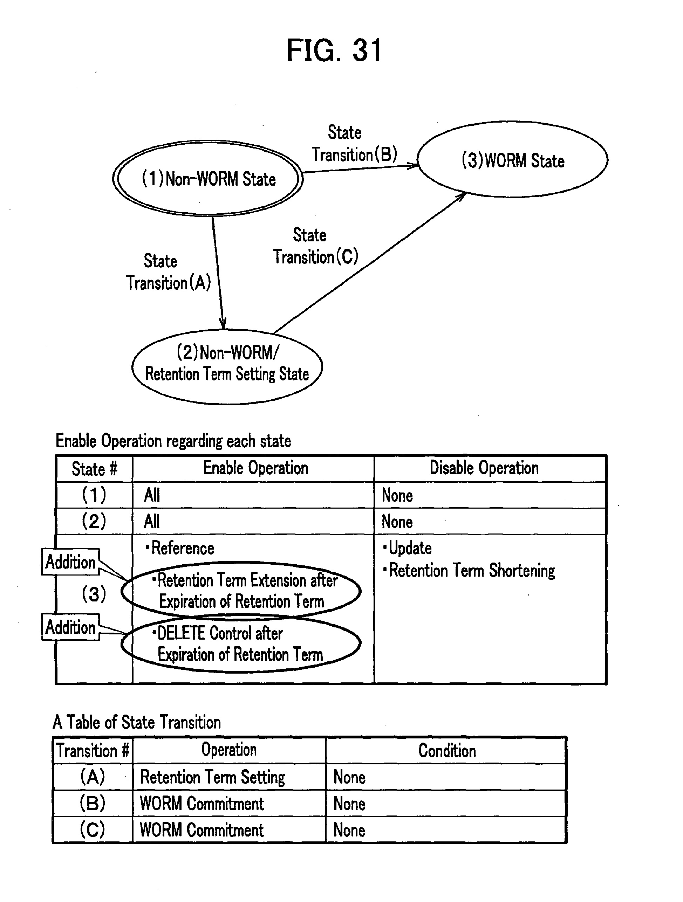

FIG. 31 shows another variation regarding WORM state. In this variation, the state of WORM/Un-Writable and the state of WORM/Writable have been consolidated in a single kind of WORM state though they are differently handled in the first and second embodiments. The quantity of the state is reduced from four to three and therefore the kind of the enable controls of the state transition is reduced to be three and the enable control and disable control are differently handled. As shown in FIG. 31, an enable control has been added so that the control of the expiration of the retention term and the file delete after the expiration of the retention term is possible. The selection of the state is not limited by that shown in this variation. For example, it is preferred that only two states as non-WORM state and WORM state are selected or three states as non-Worm state, the states of WORM/Un-Writable and WORM/Writable are accepted by removing non-WORM/retention term setting.

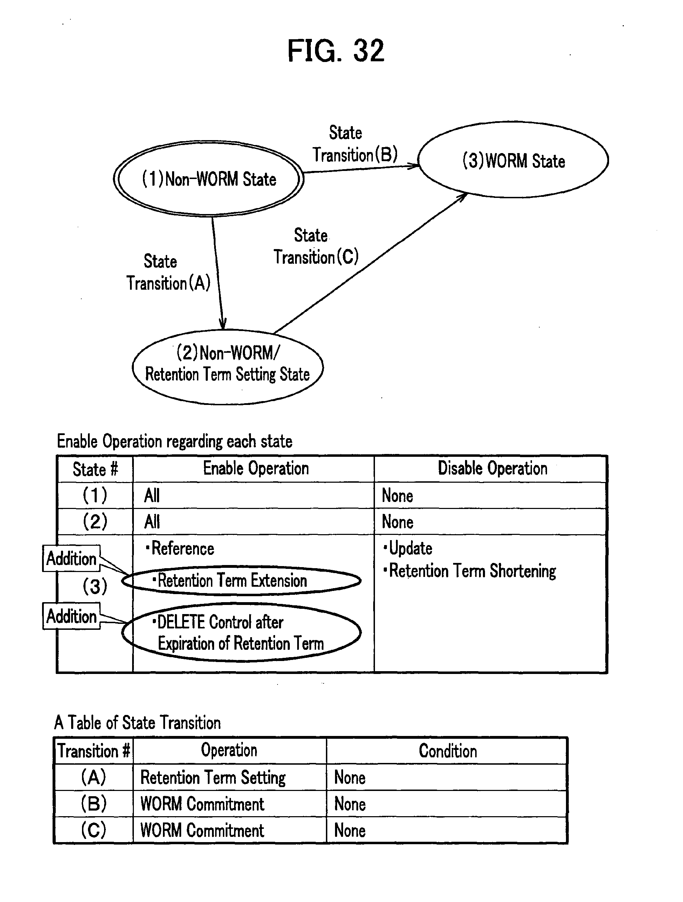

FIG. 32 shows another variation such that the enable control and disable control in the WORM state which has been shown in FIG. 31. The retention term extension control encircled by elliptic circles as shown in the control capabilities in FIG. 32 is different from the conditions given for the table of the control capabilities shown in FIG. 4. The control for the retention term extension is possible only after the expiration of the retention term in the variation shown in Fig. 31. For the variation shown in FIG. 32, the condition regarding the handling after the expiration of the retention term is not cared. Since the DELETE control is same as that given in the variation shown in FIG. 31, the explanation is cancelled. The operations for the enable control and the disable control for each state are not limited by those described above.

### (Variations for Command Input and Resultant Output)

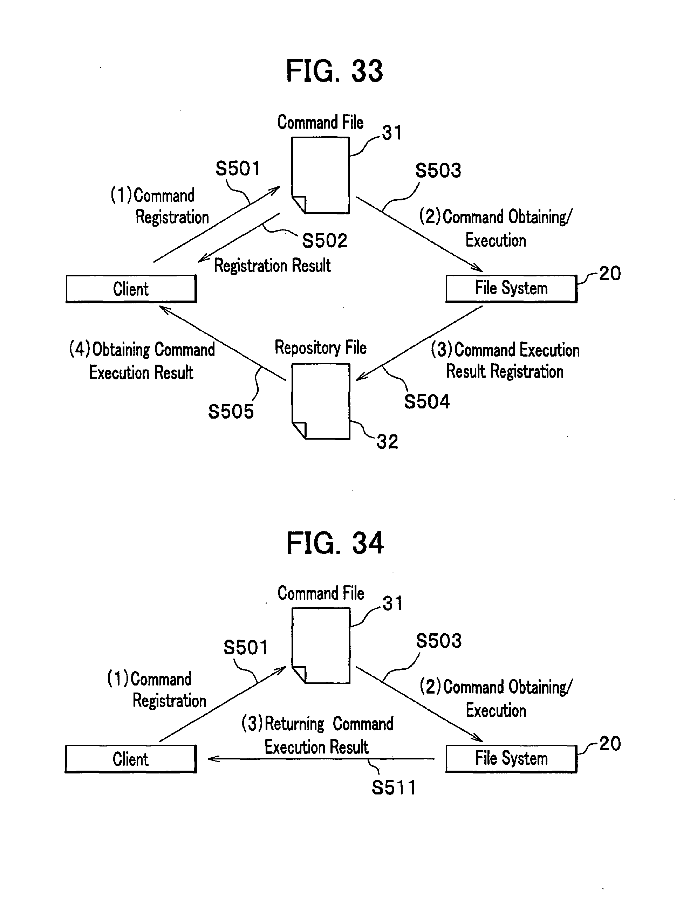

The figures from FIG. 33 to FIG. 36 show the variations that explain the command input and the resultant output of operations. The variations correspond to the registration results, the results of the command executions and the existence of use of repository file 32.

The variation shown in FIG. 33 provides the results of command execution by using the repository files 32. To begin with, the client resistors the command through writing the command in the command file 31 (S501) and the registration result is returned to the client (S502). The command file 31 is fetched by the file system access control module 5. After the command has been executed (S503), the result of the command execution is recorded (S504) and the execution result can be obtained by the client (S505) thereafter.

FIG. 34 shows a variation that the result of the command execution is returned to the client without recording in the repository file 32. Since the steps S501 and S503 execute the same processes as the steps S501 and S503 shown in FIG. 33, further explanation is cancelled. The variation shown in FIG. 34 does not have the step S504 such that the registration result is returned to the client or the process regarding the repository file 32. The file system access control module 5 of the file system 20 directly returns the result of the command execution (S511), in stead of the steps S504 and S505.

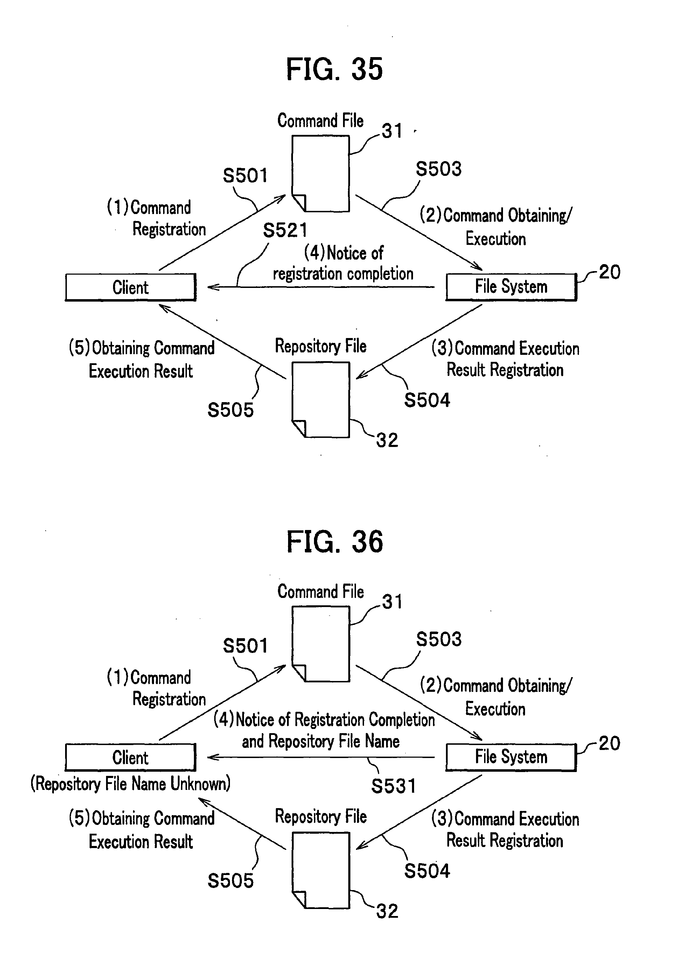

FIG. 35 shows a variation that the file system access control module 5 informs the completion of the registration by using the repository file 32. Since the steps in FIG. 35 are same as those in FIG. 33 besides the step S521, the same codes are used and the further explanation is cancelled. The variation in FIG. 35 does not have the step such as the step S502 that is to return the registration result of the command to the command file 31 but the file system access control module 5 obtains the command, completes the execution thereof, records the execution result in the repository file 32 and inform the completion of the registration to the client. According to this procedure of the process, the time delay that the client has got to know for the completion of the command execution is shorter than the time delay of the case when the command execution has been completed after obtaining the execution results of the repository file 32.

FIG. 36 shows a process, being different from the variation shown in FIG. 35, wherein the file name of the repository file 32 is not known before the command execution. Since this variation has the same steps shown in FIG. 33 besides the step S531 in FIG. 36, the same codes are used and the further explanation is cancelled. In comparison to the variation shown in FIG. 35, the variation shown in FIG. 36 features that the file name of the repository file 32 is not known before the command execution and the step that the file system access control module 5 informs the file name of the repository file 32 to the client. When the client obtains the results of the command execution, the client obtains the result of the command execution from the repository file 32 (S531). In this variation, the repository file name is unknown however it may be preferred to assign a repository file name when the command is registered. For this variation, the file system access control modules 5 of the file system inform only the completion to the client.

Referring to FIG. 10 and FIG. 25, two variations are explained. FIG. 10 shows a synchronous process triggered by WRITE to the command file 31. A variation shown by FIG. 25 is a variation such that the command process starts synchronously the command execution at the opportunity of the time to write the command in the command file 31. However the opportunity when the command process starts is not limited to the case when the command is written in the command file 31. Two variations to be explained here are the process does not start merely when the command is written in the command file 31 but when the mode change to Read Only attribute is made. By the opportunity event such as the attribute control ("triggering" hereinafter) for the command file 31, the command process has started and then two variations are made; one for a synchronous process and the other for an asynchronous process.

The variation for the synchronous process is carried out in the similar process to that shown in Fig. 25 besides triggering. After triggering, the command daemon process module 18 starts the operation, obtains the WORM commands from the command file 31, confirms the content of the commands, execute the commands and records the progress and the results of the processes to the repository file 32. When the command daemon process module 18 obtains the progress and the results of the process, the command daemon process module 18 obtains them from the repository file 32.

The update of attribute of the command file 31, which is triggering, is not necessary to actually change the attribute of the file 31 but is to be used as triggering the command daemon process module 18. The triggering is not limited to the change of attribute such as the mode change of Read Only but any of the start of processes.

The variation of the asynchronous operation is substantially same as the process triggered by WRITE to the command file 31. More specifically similar to the first embodiment, the command daemon process module 18 has been installed in the command file 31 and the command is processed in a constant time interval. Even when WRITE to the command file 31 is carried out, the command file 31 is not the objective of the command daemon process module 18 but the processing commands that are followed with triggering are only processed by the command daemon process module 18.

In this variation, the attribute change to the command file 31, which is a trigger operation, is not necessary to actually change the attribute of the command file 31 but is used as an opportunity to start the operation. The triggering is not only limited in the attribute change such as the mode change of Read Only but any operation that can be the triggering of the process.

We have been explaining the embodiments and the variations of the present invention. The present invention is not confined in particular examples. Although there have been disclosed what are the patent embodiment of the invention, it will be understood by person skilled in the art that variations and modifications may be made thereto without departing from the scope of the invention, which is indicated by the appended claims. For example, a process which is carried with plural computers under cooperative process may be used.

By selecting any of the present embodiments, it is possible to operate the file system using the command files. The WORM commitment request command which is registered in the command file can be carried out in a single transition by which the WORM commitment for plural files and directory is carried out.

All of the embodiments are realized by a processor which is controlled and operated by computer software program which includes a set of the software commands. The computer system which realizes the embodiments of the present invention may preferably have a capability such as a disc drive to read the necessary computer software program, being recorded in a CD-ROM (Compact Disc Read Only Memory), for the operation regarding the present invention.

## Claims

1. A file system access control apparatus which is implemented by a computer comprising at least a processing means, a memory means to store computer programs and data to be processed therein, a device access means which enables to access to an external storage device, a file control means to control a file system and an interface means which supports communication through an internet, wherein said file control means includes command files which are to request processing access command to said file system by means of standard protocols which provide functions used for said access command to said file system,
having a function to start processing access commands to said file system in triggering with a WRITE command in response to receipt of WRITE command thereof to said command files by means of said standard protocols using said memory means and said interface means.

2. A file system access control apparatus according to Claim 1, wherein said file control means further has a WORM control module for WORM commitment of which WORM control module prohibits WRITE operation and updating operation to files which are committed to the WORM status in an assigned retention term.

3. A file system access control apparatus according to Claim 1 or Claim 2, wherein said file control means further has a daemon process program by which a command access to said file system is executed in response to said WRITE command to said command files and said daemon process executes said command access in a predetermined time interval.

4. A file system access control apparatus according to any one of Claims 1 to 3, wherein said file control means starts a command operation to said file system synchronously to receipt to a WRITE command to said file system.

5. A file system access control apparatus according to any one of Claims 1 to 4, wherein said file control means has repository files and register means to register in repository files by which execution results of a command are registered therein and said register means registers execution results into said repository files after receipt of said WRITE command upon receipt of said WRITE command to said command file.

6. A file system access control apparatus according to any one of Claims 1 to 5, wherein said file control means returns said execution results as a return value to a terminal which issues a request of a WRITE command after executing said WRITE command upon receipt of said WRITE command to command file.

7. A file system access control apparatus according to any one of Claims 1 to 6, wherein said file control means carries out an error process by terminating execution of a DELETE command in a case that a file which is an objective file against said DELETE command has not experienced said retention term.

8. A file system access control apparatus according to any one of Claims 1 to 7, wherein said file control means carries out an error process by terminating execution of a file updating command in a case that a file which is an objective file against said file updating command has been set for said retention term.

9. A file system access control method which is performed by a computer comprising at least a processing means, a memory means to store computer programs and data to be processed therein, a device access means which enables to access an external storage device, a file control means to control a file system and an interface means which supports communication through an internet, wherein
said file control means performs a function by means of command files which are to request processing access command to said file system by means of standard protocols, a function to receive a WRITE command to said command files by means of said standard protocols using said memory means and said interface means and a function to start processing access commands to said file system in triggering with a WRITE command in response to receipt of WRITE command.

10. A file system access control method according to Claim 9, wherein said file control means further performs a function of WORM commitment of which WORM commitment prohibits WRITE operation and updating operation to files in an assigned retention term.

11. A file system access control method according to Claim 9 or Claim 10, wherein said file control means further performs a function of a daemon process by which a command access to said file system is executed in response to said WRITE command to said command files and said daemon process executes said command access in a predetermined time interval.

12. A file system access control method according to any one of Claims 9 to 11, wherein said file control means performs a function to start a command operation to said file system synchronously to receipt to a WRITE command to said file system.

13. A file system access control method according to any one of Claims 9 to 12, wherein said file control means has repository files and register means to register in repository files by which execution results of a command are registered therein and said register means performs a function to register execution results into said repository files after receipt of said WRITE command upon receipt of said WRITE command to said command file.

14. A file system access control method according to any one of Claims 9 to 13, wherein that said file control means performs a function to return said execution results as a return value to a terminal which issues a request of a WRITE command after executing said WRITE command upon receipt of said WRITE command to command file.

15. A file system access control method according to any one of Claims 9 to 14, wherein that said file control means performs a function to carry an error process by terminating execution of a DELETE command in a case that a file which is an objective file against said DELETE command has not experienced said retention term.

16. A file system access control method according to any one of Claims 9 to 15, wherein said file control means performs a function to carry an error process by terminating execution of a file updating command in a case that a file which is an objective file against said file updating command has been set for said retention term.

17. A recording medium including file system access control program which performs with a computer comprising at least a processing means, a memory means to store computer programs and data to be processed therein, a device access means which enables to access an external storage device, a file control means to control a file system and an interface means which supports communication through an internet, wherein
said file control means performs a function by means of command files which are to request processing access command to said file system by means of standard protocols, a function to receive a WRITE command to said command files by means of said standard protocols using said memory means and said interface means and a function to start processing access commands to said file system in triggering with a WRITE command in response to receipt of WRITE command.

18. A recording medium including file system access control program according to Claim 17, wherein said file control means further performs a function of WORM commitment of which WORM commitment prohibits WRITE operation and updating operation to files in an assigned retention term.
